# EUROPEAN PATENT SPECIFICATION

(11) **EP 4 314 665 B1**
(45) Date of publication and mention of the grant of the patent: **08.07.2026**
(21) Application number: 22717400.0
(22) Date of filing: 31.03.2022
(51) Int. Cl.: F24F 13/20, F24F 1/60, F24F 13/32, F24F 1/0043, F24F 11/89, F24F 13/14, F24F 110/00

(54) **A METHOD OF MANUFACTURING A HEATING, VENTILATING AND AIR CONDITIONING HVAC FIELD DEVICE, AN HVAC FIELD DEVICE AND AN HVAC SYSTEM**
VERFAHREN ZUR HERSTELLUNG EINER HEIZUNGS-, LÜFTUNGS- UND KLIMAANLAGE, HVAC-FELDVORRICHTUNG UND HVAC-SYSTEM
PROCÉDÉ DE FABRICATION D'UN APPAREIL DE TERRAIN DE CHAUFFAGE, VENTILATION, CLIMATISATION (CVC), APPAREIL DE TERRAIN DE CVC ET SYSTÈME DE CVC

(30) Priority: 31.03.2021 CH 3392021; 30.04.2021 CH 4732021; 14.05.2021 CH 5452021; 14.03.2022 CH 2732022
(43) Date of publication of application: 07.02.2024
(73) Proprietor: Belimo Holding AG, 8340 Hinwil (CH)
(72) Inventor: NIEDERHAUSER, Urs, 8422 Pfungen (CH); BÖHLE, Peter, 8634 Hombrechtikon (CH); JENNI, Stefan, 9630 Wattwil (CH); BLÖCHLINGER, Simon, 8646 Wagen (CH)
(74) Representative: Rentsch Partner AG
(86) International application number: PCT/EP2022/058641
(87) International publication number: WO 2022/207833

(56) References cited:
- EP-A1- 3 706 427
- CN-A- 106 500 186
- CN-A- 107 314 439
- CN-B- 105 757 817
- DE-U1- 202019 100 593
- KR-A- 20200 012 332
- KR-A- 20200 012 333
- US-A1- 2015 333 669
- US-A1- 2019 199 035
- US-A1- 2019 232 210

## Description

### Field of the invention

The present invention relates to a method of manufacturing a Heating, Ventilating and Air Conditioning HVAC field device, an HVAC field device and to an HVAC system.

### Background of the invention

As people spend an estimated 90% of their time indoors, Heating, Ventilating and Air Conditioning HVAC systems have become of great importance to everyday life and have a great impact on people's health and comfort. In the field of Heating, Ventilating and Air Conditioning, HVAC systems typically comprise a fluid transportation system connected to a heat exchanger arranged such as to be able to transfer thermal energy to or from the environment to be controlled (referred to hereafter as controlled environment) by means of a fluid circulating in said fluid transportation system. In order to be able to regulate the flow of fluid to/ from the heat exchanger and hence the amount of thermal energy transferred, the heat exchanger is connected to the fluid transportation system via one or more actuated parts, such as valves and dampers. The actuated parts are mechanically controlled by HVAC actuators, including motorized HVAC actuators coupled to the actuated part. In the field of HVAC, HVAC actuators typically comprise an electric motor, coupled (through gears and/or other mechanical coupling), to the actuated part. HVAC actuators are electrically controlled by HVAC controllers, in particular an electronic circuit thereof. In addition, various sensors are used to measure environmental variables such as humidity, temperature, CO₂ or dust particle levels. Furthermore, HVAC sensors are used to determine operational parameters of various elements of an HVAC system, such as an actuated position of an actuated part, the operational state of an HVAC actuator.

HVAC systems commonly comprise an HVAC controller configured to generate control signal(s) for operating the HVAC actuator(s) and/or process signals from the HVAC sensors. In typical HVAC applications, the HVAC controller(s) generate the control signals for the HVAC actuators according to various control algorithms (e.g. with regards to differential pressure, room temperature, flow of energy, etc.) to thereby actuate the actuators, such as to open and close an orifice of a valve or damper to regulate the flow of fluid to and from heat exchanger(s).

Certain control functions of HVAC systems may be performed from a remote server arranged remote from the controlled environment, the remote server comprising a computer program such as a Building Management System BSM to control and monitor a building's mechanical and electrical equipment. Furthermore, certain functions, in particular the commissioning and/or configuration of HVAC systems may be performed by means of portable devices, such as a general purpose mobile computing device (e.g. a smartphone) or a dedicated configuration tool.

In summary, devices of HVAC systems may be categorized into two categories by their location with respect to the controlled environment: remote devices and field devices. Field devices comprise devices of an HVAC system which are located within the controlled environment or mechanically connected, e.g. by the fluid transportation system, to the controlled environment. Field devices implement one or more electrical and/or mechanical functions and comprise - but not limited to - actuators, sensors, or a combination thereof.

With increasing complexity of HVAC systems, there is an ever increasing demand for a wide variety of field devices implementing various electrical and/or mechanical functions. Even for the same function, a range of HVAC field devices are required to cover a wide array of use cases each characterized by different parameters. For example, for the mechanical function of actuating a valve or a damper, different variants of a certain type of HVAC actuator are required to cover a wide range of flow regulation by means of valves of different sizes, requiring different actuation forces (e.g. a torque ranging from 1 Nm up to 160 Nm or even more). Different variants of HVAC actuators are also required to cover different power supplies and also different actuation times. Furthermore, the nature of the controlled environment also leads to varying demands on the HVAC field devices. For example, special variants of HVAC field devices are needed to be suitable for use in harsh environments. In addition, depending on the architecture of the HVAC system, various variants of HVAC field devices are needed to cover the different types of connectivity requirements.

Covering such a wide range of mechanical functions, electrical functions and suitable for such a wide range of environments, results in a very high number of combinations of HVAC field devices that need to be manufactured, serviced and maintained. Using known methods of manufacturing, satisfying such demand for a wide range of HVAC field devices is complex and therefore costly for manufacturers. In addition to complex and costly manufacturing, the function of known HVAC field devices is often difficult to expand or alter without having to exchange the entire HVAC field device.

In order to address the need to provide a wide range of HVAC devices in a large number of different configurations without having to manufacture a specific type HVAC field device for each possible combination of functions and/or parameters, according to EP2902681 B1, an HVAC actuator is assembled from a base HVAC device block having a connection interface and an add-on device block connected to the connection interface of the base HVAC device block, the add-on HVAC device block extending the function of the base HVAC device block. However, according to EP2902681B1, in order to provide a function which is not supported by either the base HVAC device block or by the installed add-on HVAC device block, the installed add-on HVAC device block must be exchanged for another add-on HVAC device block. This greatly limits the capabilities of extending the function of a base HVAC device block to the additional functions provided by a single add-on HVAC device block. Embodiments of EP2908720B1 propose adding a second connection interface to the base HVAC device block to accommodate a second add-on HVAC device block. However, on one hand, merely multiplying the number of connection interfaces of EP2902681 B1 is greatly limited by the available physical space on the housing of the base HVAC device block. On the other hand, multiplying the number of connection interfaces necessitates decreasing the physical dimensions of the connection interface - to allow the base HVAC device block to accommodate more add-on HVAC device blocks - which weakens the structural rigidity/ integrity of the assembled HVAC field device. Furthermore, connecting all the add-on HVAC device blocks directly to the base HVAC device block has the disadvantage that exchanging the base HVAC device block requires all add-on HVAC device blocks to be disconnected.

### Summary of the invention

It is an object of embodiments disclosed herein to provide a method of manufacturing of HVAC devices that - at least partially - addresses the disadvantages of known methods of manufacturing HVAC field devices.

In particular, it is an object of embodiments disclosed herein to provide a method of manufacturing an HVAC field device that overcomes the restrictions of prior art methods with respect to the flexibility and extent of providing various electrical and/or mechanical functions to an HVAC field device.

The above-identified objective is addressed according to the present disclosure by a method of manufacturing an HVAC field device from a plurality of HVAC device blocks according to claim 1, the method comprising the steps of a) providing a base HVAC device block; b) providing one or more add-on HVAC device block(s); and c) stacking the base HVAC device block and the one or more add-on HVAC device block(s).

The base HVAC device block - provided according to step a) of the method of manufacturing an HVAC field device - comprises: a housing; an electric motor and/or a sensor; a connection interface; and an electronic circuit connected to the electric motor and/or the sensor. The electric motor is arranged within the housing and arranged - upon the HVAC field device being installed - to drive an actuated part. The sensor of the base HVAC device block is configured to measure a parameter of the HVAC system, in particular an environmental parameter, such as a temperature, humidity, particulate matter (PM) and/or CO2 level of an environment controlled by the HVAC system. Alternatively, or additionally, the sensor of the base HVAC device block is provided to measure operational parameters of various components of the HVAC system such as an actuated position of the actuated part and/or the operational state of the HVAC field device and/or other parameters of the HVAC system, such as a flow rate or differential pressure at locations of a liquid through a fluid transportation system. The connection interface of the base HVAC device block is of a first-type and is arranged in particular on an external surface of the housing. Depending on the particular embodiment, the electronic circuit of the base HVAC device block is connected either to the electric motor and/or to the sensor. Connected to the electric motor, the electronic circuit is configured to control the electric motor in order to implement one or more HVAC control functions. Connected to the sensor, the electronic circuit is configured to receive and/or process signals representative of the measured parameter(s) of the HVAC system.

The one or more add-on HVAC device block(s) provided according to step b) of the method of manufacturing an HVAC field device - each comprise a housing and a connection interface of the first-type and a connection interface of a second-type. According to embodiments disclosed herein, the housing can but does not have to enclose all parts of the respective add-on HVAC device block. The connection interfaces of the first-type and the connection interface(s) of the second-type of the add-on HVAC device block(s) are configured to be mechanically connectable with each other. In particular, the shape and dimensions of the first-type and second-type connection interfaces are such as to allow one to mechanically connect to the other.

After the base HVAC device block and the one or more add-on HVAC device block(s) required for the required HVAC functions have been provided, in a step c) of the method of manufacturing an HVAC field device according to the present disclosure, the base HVAC device block and the one or more add-on HVAC device block(s) are stacked. Depending on the arrangement of the connection interfaces on the respective housings, the HVAC device blocks are stacked on top of each other, side by side or a combination thereof.

Upon stacking, the connection interface of the first type is mechanically connected to the connection interface of the second type of adjacent HVAC device blocks.

Manufacturing an HVAC field device by stacking according to the method of the present disclosure, is advantageous as stand-alone function(s) of a base HVAC device block (i.e. function(s) provided by a base HVAC device block independently from add-on HVAC device block(s)) can be freely extended by the function(s) provided by one or more add-on HVAC device blocks without limitations posed by the number of connection interfaces that can be accommodated directly by the base HVAC device block. By providing the add-on HVAC device blocks with connection interfaces of both first- and second-type, the add-on HVAC device blocks can be stacked directly onto the base HVAC device block or onto an add-on HVAC device block. By providing the add-on HVAC device blocks with connection interfaces of both first- and second-type, each add-on HVAC device block further extends the possibility of stacking another add-on HVAC device block, the connection interface of the first-type serving the purpose of connecting the add-on HVAC device block while the connection interface of the second-type serving the purpose of receiving a further HVAC device block. Hence, there is effectively no limit to the number of add-on HVAC device blocks that can be stacked with a base HVAC device block to form an HVAC field device. By eliminating the limit on the number of HVAC device blocks that can be combined with a base HVAC device block, as is the case with prior art methods / prior art HVAC field devices, the complexity of each individual add-on HVAC device block can be reduced, allowing a dedicated add-on HVAC device block to be provided for each particular HVAC function. This in turn enables a higher degree of reuse of HVAC device blocks between different HVAC field devices, reducing costs of manufacturing, maintenance and increasing flexibility in providing new functionalities.

Furthermore, by eliminating the limit on the number of HVAC device blocks that can be combined with a base HVAC device block, as is the case with prior art methods / prior art HVAC field devices, there is no need to compromise with respect to the function provided by an HVAC field device. In other words, the method of manufacturing an HVAC field device/ the HVAC field device according to the present disclosure is advantageous since the flexibility of providing as many add-on HVAC device blocks as need ensures that as many functions are fitted to the HVACfield device as required but not morethan necessary.

A further advantage of the method/ HVAC field device of the present disclosure is that, since an unlimited number of HVAC device blocks can be combined using a single connection interface and only a pair of connection interfaces on the base HVAC device block and add-on HVAC device blocks, respectively, the space available for the connection interfaces is not reduced by increasing the number of add-ons - as would be the case in prior art solutions. According to embodiments of the present disclosure, essentially entire sides (e.g. top and bottom sides) of the housing of the HVAC device blocks are taken up by the connection interfaces, which allows a rigid mechanical connection between the HVAC device blocks after stacking, yielding a robust HVAC field device, while keeping the number of stackable HVAC device blocks open.

According to embodiments disclosed herein, the connection interfaces of the first-type comprise a mechanical interface of a first-type and the connection interface(s) of the second-type comprise a mechanical interface(s) of a second-type. The mechanical interface(s) of the first-type and the mechanical interface(s) of the second-type are configured such as to align adjacent HVAC device blocks upon the HVAC device blocks being stacked. For a better aligning effect, according to embodiments, the mechanical interface(s) are tapered at their outer surfaces.

According to embodiments of the present disclosure, the mechanical interfaces of the first-type comprise a recess, in particular a circumferential recess arranged on a first side of the housing of the respective HVAC device block and the mechanical interface(s) of the second-type comprise(s) a protrusion, in particular a circumferential protrusion arranged on a second side of the housing of the respective HVAC device block. Alternatively, according to further embodiments of the present disclosure the mechanical interfaces of the first-type comprise a protrusion, in particular a circumferential protrusion arranged on a first side of the housing of the respective HVAC device block and the mechanical interface(s) of the second-type comprise(s) a recess, in particular a circumferential recess arranged on a second side of the housing of the respective HVAC device block.

According to embodiments disclosed herein, the mechanical interface(s) of the first-type and the mechanical interface(s) of the second-type the mechanical interfaces are configured to mutually interlock by an interface-fit upon the HVAC device blocks being stacked to thereby fixedly attach the plurality of HVAC device blocks to each other. The term fixedly attaching, as used herein, refers to attaching such that a release force is required to separate the fixedly attached HVAC device blocks, the release force exceeding forces applied to the HVAC device blocks under normal operation of the HVAC field device and/or the release force acting in a direction/manner different from forces applied on the HVAC device blocks under normal operation of the HVAC field device.

According to even further embodiments, the method of manufacturing an HVAC field device further comprises the step of providing an adhesive and/or fastening means to the mechanical interfaces for fixedly attaching the plurality of HVAC device blocks to each other upon being stacked. According to embodiments of the present disclosure, the fastening means comprise latches, screws or bolts in order to mechanically connect the adjacent HVAC device blocks. Alternatively, or additionally, the HVAC device blocks are welded together after being stacked, in particular by ultrasonic welding or laser welding.

According to the specific requirements on the HVAC field device, a sealant is provided at the connection interfaces to seal the HVAC device blocks together, with respect to humidity, dust or other sources of contamination.

It is an object of further embodiments disclosed herein to provide an HVAC field device / a method of manufacturing an HVAC field device which further enable the extension of the functionalities of the base HVAC device block by electric functionalities provided by an add-on HVAC device block comprising an electronic circuit. This further objective is addressed by the HVAC field device according to claim 10, respectively the method of manufacturing an HVAC field device according to claim 1 in that the connection interface of the first-type of the base HVAC device block and the connection interface(s) of the second-type of the add-on HVAC device block(s) comprise electrical interfaces electrically connected to the respective electronic circuit, configured to be electrically connectable to each other.

It is an object of further embodiments disclosed herein to provide an HVAC field device / a method of manufacturing an HVAC field device which further enable the extension of the functionalities of the base HVAC device block by electric functionalities provided by any number of add-on HVAC device blocks comprising an electronic circuit. This further objective is addressed by extending the flexible extension by add-ons capability to comprise flexible extension by HVAC device blocks comprising an electronic circuit. In particular, this further objective is addressed in that the connection interfaces each comprise an electrical interface electrically connected to the respective electronic circuit, the connection interfaces being configured to be electrically connectable to each other. In other words, the connection interface of the first-type of the base HVAC device block and both connection interfaces of the add-on HVAC device blocks all comprise electrical interfaces. According to embodiments disclosed herein, in order to allow transfer of data and/or electric energy between HVAC device blocks of the HVAC field device, stacking the plurality of HVAC device blocks further comprises electrically connecting the plurality of HVAC device blocks to each other via the electrical interfaces of adjacent HVAC device blocks. The electrical interfaces of the HVAC device blocks are configured such as to forward data and/or electric energy between the electrical interfaces of the first-type to the electrical interfaces of the second-type, thereby allowing transfer of data and/or electric energy not only between adjacent HVAC device blocks, but between all HVAC device blocks of the HVAC field device. In other words, data and/or electric energy are passed through by the HVAC device blocks.

Embodiments wherein the HVAC device blocks comprise both mechanical as well as electrical connection interfaces are particularly advantageous as both the mechanical and electrical function of the base HVAC device block can be freely extended by mechanical and/or electrical function(s) provided by one or more add-on HVAC device blocks without limitations posed by the number of connection interfaces that can be accommodated directly by the base HVAC device block. By providing the add-on HVAC device blocks with mechanical and electrical connection interfaces of both first- and second-type, irrespective whether an add-on HVAC device block comprises mechanical and/or electrical function(s), the add-on HVAC device block can be stacked directly onto the base HVAC device block or onto an add-on HVAC device block. By providing the add-on HVAC device blocks with mechanical and electrical connection interfaces of both first- and second-type, each add-on HVAC device block further extends the possibility of stacking another add-on HVAC device block, irrespective whether an add-on HVAC device block comprises mechanical and/or electrical function(s), the connection interface of the first-type serving the purpose of connecting the add-on HVAC device block while the connection interface of the second-type serving the purpose of receiving a further HVAC device block. Thereby, there is effectively no limit to the number of add-on HVAC device blocks that can be stacked with a base HVAC device block to form an HVAC field device. By eliminating the limit on the number of HVAC device blocks that can be combined with a base HVAC device block, as is the case with prior art methods / prior art HVAC field devices, the complexity of each individual add-on HVAC device block can be reduced, allowing a dedicated add-on HVAC device block to be provided for each particular HVAC function, be it mechanical and/or electrical function. This in turn enables a higher degree of reuse of HVAC device blocks between different HVAC field devices, reducing costs of manufacturing, maintenance and increasing flexibility in providing new mechanical and/or electrical function.

Furthermore, by eliminating the limit on the number of HVAC device blocks that can be combined with a base HVAC device block, as is the case with prior art methods / prior art HVAC field devices, there is no need to compromise with respect to the mechanical and/or electrical function provided by an HVAC field device. In other words, the method of manufacturing an HVAC field device/ the HVAC field device according to the present disclosure are advantageous since the flexibility of providing as many add-on HVAC device blocks as needed ensures that as many mechanical and/or electrical functions are fitted to the HVAC field device as needed but not more than necessary.

According to embodiments of the present disclosure, the electrical interface(s) of the connection interface(s) of the first-type comprise(s) an electrical connector of a first-type arranged at a first side of the respective HVAC device block while the electrical interface(s) of the connection interface(s) of the second-type comprise(s) an electrical connector of a second type arranged at a second side of the respective HVAC device block(s), in particular on a second side of the housing arranged opposite the first side.

It is an object of further embodiments of the present disclosure to enable a plug-and-play manufacture/ assembly of HVAC device blocks into an HVAC field device. This further object is addressed according to the present disclosure by implementing an exchange of configuration data between the HVAC device blocks. Configuration data is stored in the electronic circuit of a first of the plurality of HVAC device blocks while its electronic circuit is configured to transmit configuration data through the electrical interface of the first of the plurality of HVAC device blocks. Furthermore, the electronic circuit of a second of the plurality of HVAC device blocks, different from the first of the plurality of HVAC device blocks, is configured to receive configuration data through the electrical interface of the second of the plurality of HVAC device blocks. The method according to embodiments of the present disclosure comprise the step of causing configuration data of the first of the plurality of HVAC device blocks to be transferred to the second of the plurality of HVAC device blocks upon the HVAC field device being supplied with electrical energy. Alternatively, or additionally, the HVAC device blocks are configured such as to exchange configuration data upon the HVAC device blocks being stacked.

Exchanging configuration data between the HVAC device blocks is advantageous since it allows the HVAC device blocks of an HVAC field device to be automatically configured. In case of HVAC field devices comprising more than two HVAC device blocks, the configuration data from one HVAC device block can be transferred even to not directly adjacent HVAC device blocks by means of step by step propagation between adjacent HVAC device blocks. Also, according to embodiments disclosed herein, the transfer, respectively receipt of configuration data is reciprocal, namely in that each HVAC device block is configured to both transmit and receive configuration data.

It is an object of further embodiments of the present disclosure to provide an HVAC field device / a method of manufacturing an HVAC field device which allows a flexible supply of the HVAC field device with electrical energy and/or a flexible configuration of the HVAC field device. This further object is addressed according to embodiments of the present disclosure in that - in addition to the HVAC device blocks comprising electrical interfaces configured to be electrically connectable to each other - an external electrical interface is provided to at least one of the HVAC device blocks. The external electrical interface is electrically connected to the electronic circuit of the at least one of the HVAC device block(s). The plurality of HVAC device blocks of the HVAC field device are configured to be powered through the external electrical interface of the at least one of the HVAC device blocks via their respective electrical interfaces. Such embodiments are advantageous as they allow the entire HVAC field device to be provided with electrical energy via a single interface namely the external electrical interface of at least one of the HVAC device block(s).

Alternatively, or additionally, the HVAC device blocks of an HVAC field device can be configured via the external electrical interface(s) of any of the HVAC device blocks. According to embodiments of the present disclosure, the external electrical interface(s) of the HVAC device blocks are identical or at least compatible with one certain electrical connector of a configuration device, allowing a flexible configuration of any of the HVAC device blocks or the entire HVAC field device through the external electrical interface of any HVAC device block.

According to further embodiments, one or more of the HVAC device blocks of the HVAC field device comprise two or more external electrical interfaces, wherein the two or more external electrical interfaces are configured such as to allow Daisy-Chaining of multiple HVAC field devices. In particular, the two or more external electrical interfaces are configured to both communicatively and/or energetically connect a plurality of HVAC field devices using a power over data line connection such as to enable data communication between the plurality of HVAC field devices and/or to enable supply of each of the plurality of HVAC field devices with electrical power from a power source connected to any one of the plurality of HVAC field devices. According to an embodiment, the external electrical interfaces are provided with a protection against electromagnetic interference, dust, and/or water.

According to embodiments disclosed herein, the one or more add-on HVAC device block(s) comprise one or more functional extension devices selected from the list comprising:
- A processing device, such as a microcontroller or application specific integrated circuit ASIC for providing computing power to the HVAC field device;
- A mechanical performance device, such as a gearing;
- A controller device, implementing HVAC control functions, such as a proportional P, a proportional-integral PI, a proportional-integral-derivative PID, an integral I and/or a neural network based control;
- A communication device, comprising a wired communication interface and/or a radio communication device - for providing communication functionalities to the HVAC field device. In particular, the communication device comprises one or more of:
   - A wired communication interface (such as an Ethernet, in particular a Power over Ethernet PoE, Single Pair Ethernet SPE, a BUS, in particular an MP Bus, BACnet, KNX or Modbus interface);
   - A Wide Area Network communication circuit (such as GSM, LTE, 3G, 4G or 5G mobile communications circuit);
   - A Low Power Wide Area Network (such as Narrowband Internet of Things NB-loT, Long Range LoRa/ LoRaWAN, SigFox, or Long Term Evolution Category M1 LTECatM1);
   - A local area network communication circuit (such as Wireless LAN);
   - A short range wireless communication circuit (such as Bluetooth, Bluetooth low energy BLE, Ultra-wideband UWB, Thread and/or Zigbee); and/ or
   - A close-range wireless communication circuit (such as Radio Frequency Identification RFID or a Near Field Communication NFC).
- An energy storage device, comprising a capacitive storage device and/or an electro-chemical storage device;
- A sensor device, comprising one or more sensors for the measurement of a parameter of an HVAC system and/or of an environmental parameter (such as temperature, humidity, etc);
- An HVAC interface device, comprising a mechanical interface to a damper and/or pipe of an HVAC system;
- A position feedback device of the actuated part;
- An electrical power supply device, for providing external electrical power to the HVAC field device, such as universal power supply devices (24 VAC to 250 VAC/24VDC-1 25VDC), or power supply devices for specific supply voltages;
- A monitoring/ service device, for performing specific service and data logging function(s); and/or
- A display device.

Add-on HVAC device blocks according to embodiments disclosed herein may be grouped into several levels:
- Level 1 HVAC device blocks comprise an application specific integrated circuit ASIC, specifically designed for basic actuator functions, such as opening or closing a valve or damper. Furthermore, Level 1 HVAC device blocks comprise a communication Bus that allows a seamless integration to Level 2 device block(s);
- Level 2 HVAC device blocks comprise a uC (microcontroller) (pre)configured for application-specific extension of the functionality of the base HVAC device block, such as for executing a program code of at least a specific HVAC application, such as Variable Air Volume VAV control based on data signals from a sensor for the measurement of an air flow. Furthermore, Level 2 HVAC device blocks support various communication protocols such as ModBus or BACnet on different physical layers such as RS485, Ethernet, in particular Power over Ethernet PoE and/or Single Pair Ethernet SPE;
- Level 3 HVAC device blocks comprise a uC (microcontroller) fully configurable for advanced HVAC functions and/or similar functionality as the Level 2 HVAC device blocks.

According to particular embodiments, the HVAC device blocks - in particular the Level 2 or 3 HVAC device blocks comprising a uC (microcontroller) - are configured such as to be programmable to execute use-case/ client specific functions. Correspondingly, according to embodiments, the Level 2 or 3 HVAC device blocks comprising a uC (microcontroller) are provided with programming interfaces for enabling the programming of the uC (microcontroller).

According to embodiments wherein any one of the add-on HVAC device blocks comprise an energy storage device such as a capacitor, in particular a supercapacitor (as functional extension device), the energy storage device is configured to supply a failsafe voltage and/or current to a base HVAC device block - comprising an electric motor - different from a regular operating voltage and/or current. Correspondingly, the base HVAC device block is configured such as to drive the electric motor with a failsafe actuation speed corresponding to the failsafe voltage and/or current. According to embodiments, the failsafe actuation speed and/or torque is higher than a regular actuation speed, when the base HVAC device is provided - by the energy storage device of the add-on HVAC device block - with a failsafe voltage and/or current greater than the regular operating voltage and/or current. Alternatively, or additionally, the base HVAC device block is configured to drive the electric motor with a failsafe actuation speed and/or torque lower than a regular actuation speed when provided - by the energy storage device of the add-on HVAC device block - with a failsafe voltage and/or current lower than a regular operating voltage and/or current. According to embodiments disclosed herein, the HVAC field device is configured such that the energy storage device of the add-on HVAC device block supplies the electric motor with a failsafe voltage and/or current in the presence of a failure condition, such as the absence of electrical energy at the external electrical interface and/or an error being detected by a sensor of the HVAC field device.

It is an object of further embodiments of the present disclosure to provide an HVAC field device / a method of manufacturing an HVAC field device which allows fitting various types of connection interfaces to HVAC device blocks. This further object is addressed according to embodiments of the present disclosure by providing one or more connection element(s) carrying the connection interfaces, in particular at least the mechanical interfaces. The connection elements are provided as frame-like structures to be arranged on a side of the respective HVAC device block, the connection elements carrying connection interfaces of the first-type and/or the connection interface of the second-type. In a subsequent step, the one or more of the plurality of HVAC device blocks are assembled by attaching the connection element(s) to the housing of the respective HVAC device block. In case of the base HVAC device block, a single connection element(s) is provided, carrying a connection interface of the first-type. In case of add-on HVAC device blocks, a pair of connection elements is provided carrying a connection interface of the first-type and a connection interface of the second-type, respectively.

Providing the connection interfaces as part of connection elements is advantageous, since thereby HVAC device blocks can be re-used and flexibly fitted with different kinds of connection interfaces without a redesign of the entire HVAC device blocks.

In order to avoid a connection interface being left exposed after the HVAC device blocks have been stacked, according to further embodiments disclosed herein, a cover HVAC device block is provided. The cover HVAC device block comprises a housing and a connection interface of the second-type. In order to cover the connection interface of the first-type of the outermost add-on HVAC device block, the cover HVAC device block is stacked on the outermost add-on HVAC device block, thereby mechanically connecting the connection interface of the second type of the cover HVAC device block to the connection interface of the first-type of the outermost add-on HVAC device block. The term 'outermost' is to be understood as the HVAC device block with an exposed connection interface, i.e. not covered by a corresponding connection interface of a further HVAC device block attached thereto.

According to embodiments disclosed herein, the cover HVAC device block further comprises a human interaction device HID electrically connected to an electronic circuit of the cover HVAC device block and/or - via the electrical connection interfaces - to an electronic circuit of one or more of the add-on HVAC block(s) and/or to the electronic circuit of the base HVAC block. Providing a human interaction device HID as part of a cover HVAC device block is advantageous as - after assembly of the HVAC field device - the cover HVAC device block is the outermost block and therefore offers access to the human interaction device HID. The human interaction device HID is arranged to control and/or display operational parameters of the HVAC field device (or one or more of its constituent HVAC device blocks) and/or one or more of the operational parameters of the HVAC system measured by the sensor.

It is an object of further embodiments disclosed herein to separate mechanical and electric functions, not only amongst add-on HVAC device blocks but also within the base HVAC device block. This further object is addressed by: providing a primary base HVAC sub-block, comprising the electric motor; providing a secondary base HVAC sub-block, comprising a mechanical drive; and connecting the primary base HVAC sub-block and the secondary base HVAC sub-block to thereby form the base HVAC device block, such that the mechanical drive is arranged between the electric motor and the actuated part. Separating the mechanical and electric functions is advantageous since it allows the re-use / combination of the same mechanical and electrical components in different combinations. Thereby, it is possible to manufacture a wide range of base HVAC device blocks in a cost efficient manner.

It is an object of further embodiments disclosed herein to allow the extension of functions of an HVAC field device even in the absence of physical space around the HVAC field device (when installed). Furthermore, it is an object of further embodiments disclosed herein to allow access to HVAC device blocks in HVAC systems, where the HVAC field device, in particular the base HVAC device block is installed at a difficult to access location. These further objects are addressed in that an add-on HVAC device block is divided into two structural parts which can be arranged offset/ remote one from the other. The housing of the respective add-on HVAC device block is divided into a first housing part and a second housing part. The first housing part accommodates the connection interface of the second-type so that the first housing part can be stacked onto the base HVAC device block (or onto another add-on HVAC device block). The second housing part accommodates the connection interface of the first-type, the electrical interface of the connection interface of the first-type being electrically connected to the electrical interface of the connection interface of the second-type by an electrical extension link, so that further HVAC device blocks - in particular a cover HVAC device block having a human interaction device HID - can be stacked onto the second housing part.

Splitting the housing of an add-on HVAC device block into two parts is advantageous as it allows the first part to be installed at the difficult to reach location of the base HVAC device block (which necessarily needs to be installed in direct mechanical connection with the actuated part, such as a valve or damper), while further HVAC device blocks, in particular HVAC device blocks comprising a human interaction device HID, can be installed at more accessible locations.

It is to be understood that both the foregoing general description and the following detailed description present embodiments, and are intended to provide an overview or framework for understanding the nature and character of the disclosure. The accompanying drawings are included to provide a further understanding, and are incorporated into and constitute a part of this specification. The drawings illustrate various embodiments, and together with the description serve to explain the principles and operation of the concepts disclosed.

### Brief Description of the Drawings

The herein described disclosure will be more fully understood from the detailed description given herein below and the accompanying drawings which should not be considered limiting to the disclosure described in the appended claims. The drawings which show:
- Figure 1:: a highly schematic cross section of an embodiment of the HVAC field device according to the present disclosure;
- Figure 2:: a highly schematic cross section of an embodiment of the HVAC field device according to the present disclosure;
- Figure 3:: a highly schematic cross section of a further embodiment of the HVAC field device according to the present disclosure, wherein the connection interface of the first-type of the base HVAC device block and the connection interface(s) of the second-type of the add-on HVAC device block(s) comprise electrical interfaces;
- Figure 4:: a highly schematic cross section of a further embodiment of the HVAC field device according to the present disclosure, wherein connection interfaces comprise electrical interfaces;
- Figure 5:: a highly schematic detailed illustration of the connection interfaces of the first- and second-type;
- Figure 6:: a highly schematic cross section of a further embodiment of the HVAC field device according to the present disclosure, configured such that configuration data is exchanged between HVAC device blocks;
- Figure 7:: a highly schematic cross section of a further embodiment of the HVAC field device according to the present disclosure, comprising an external electrical interface for powering one or more of the HVAC device blocks of the HVAC field device and/or for receiving /transmitting configuration data to/ from the HVAC field device;
- Figure 8:: a highly schematic cross section of an embodiment of an add-on HVAC device block according to the present disclosure, comprising a functional extension device;
- Figure 9A:: a highly schematic cross section of a further embodiment of the HVAC field device according to the present disclosure; wherein the connection interface of the first-type of the base HVAC device block is carried by a connection element;
- Figure 9B:: a perspective view of the HVAC field device of Figure 9A;
- Figure 10:: a highly schematic cross section of a further embodiment of the HVAC field device according to the present disclosure, wherein the connection interface of the second-type of an add-on HVAC device block is carried by a connection element;

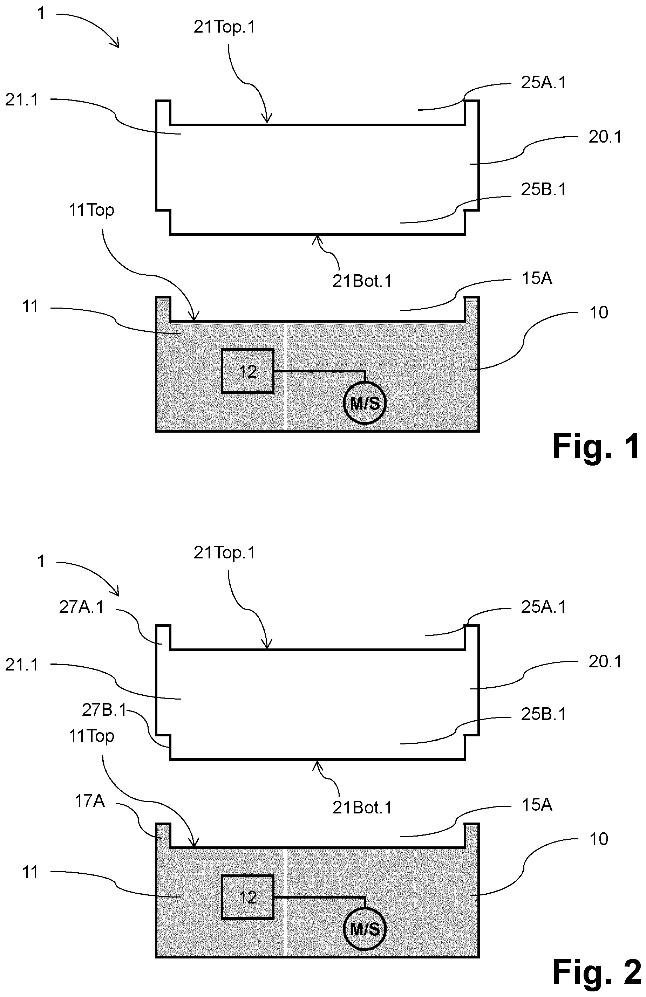

- Figure 1 1A:: a highly schematic cross section of a further embodiment of the HVAC field device according to the present disclosure, further comprising a cover HVAC device block having a display;

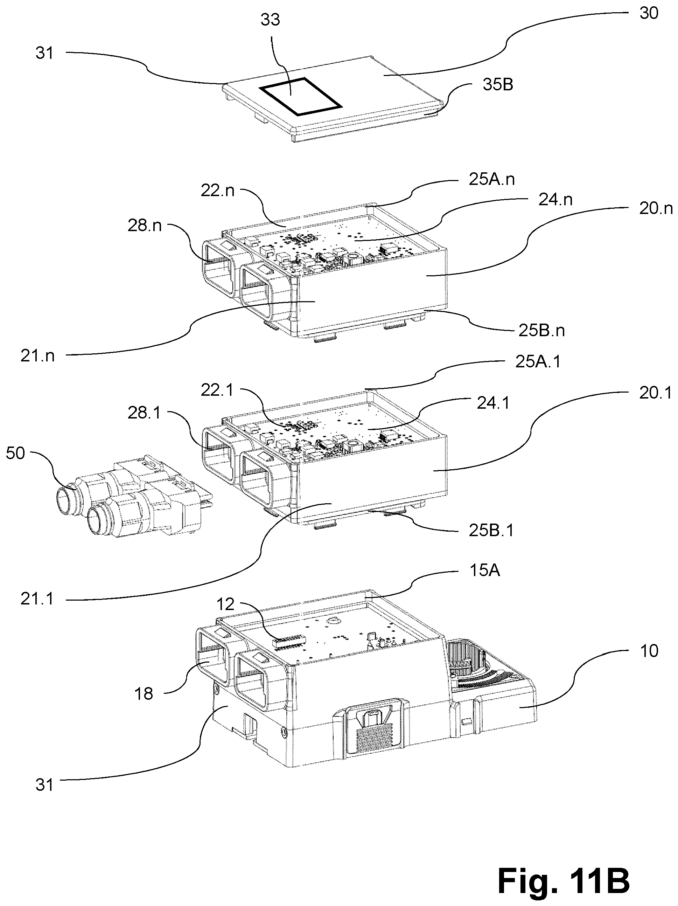

- Figure 11B:: a perspective view of the HVAC field device of Figure 1 1A;

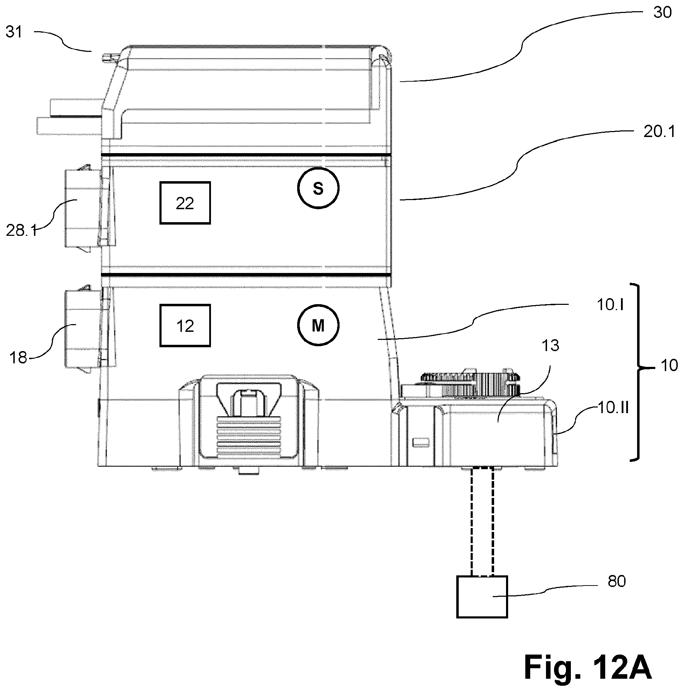

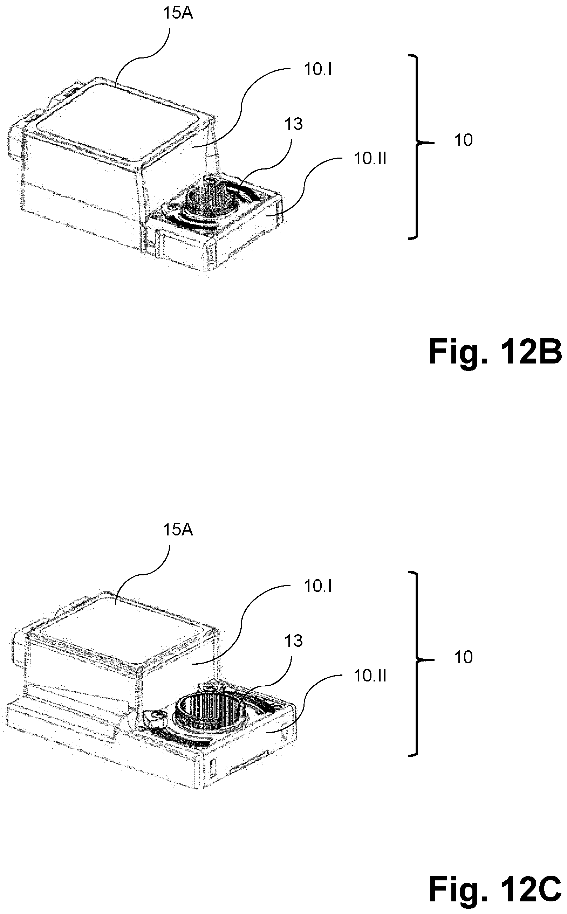

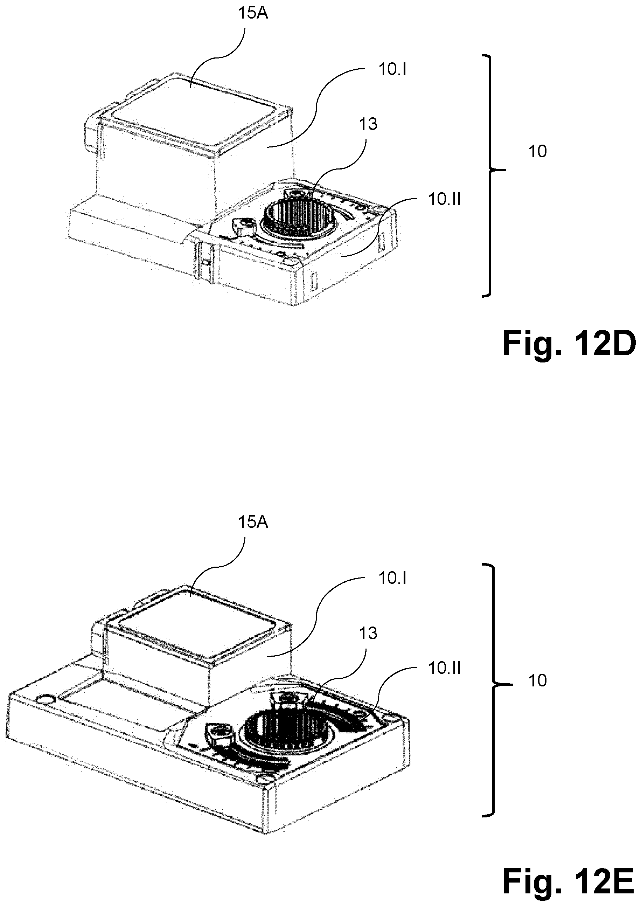

- Figure 12A:: a highly schematic cross section of a further embodiment of the HVAC field device according to the present disclosure, wherein the base HVAC device block comprises a primary base HVAC sub-block and a secondary base HVAC sub-block;
- Figure 1 2B-E:: perspective views of a base HVAC device block having different variants of a secondary base HVAC sub-block;

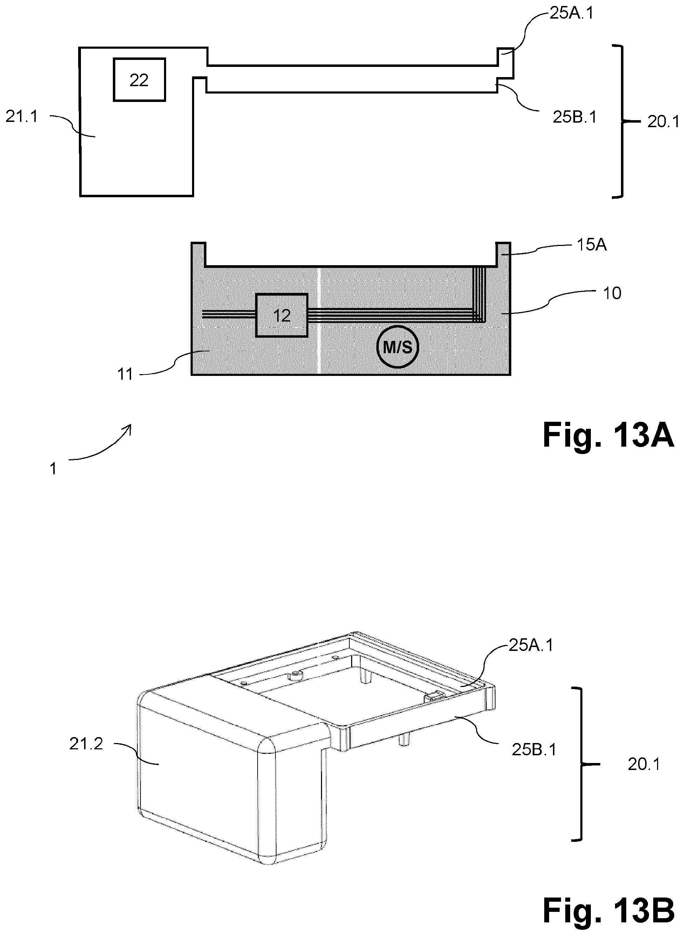

- Figure 13A:: a highly schematic cross section of a further embodiment of the HVAC field device according to the present disclosure, comprising an asymmetric add-on HVAC device block;
- Figure 13B:: a perspective view of the add-on HVAC device block of figure 13A;

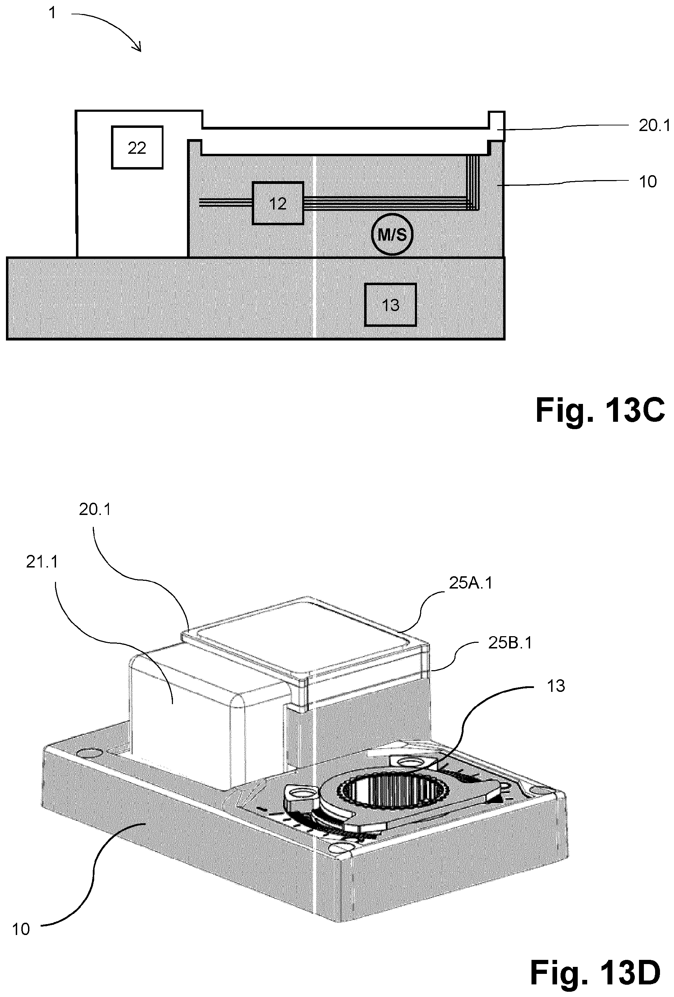

- Figure 13C:: a highly schematic cross section of the HVAC field device of Figure 13A as stacked;
- Figure 13D:: a perspective view of the stacked HVAC field device of figures 13A and C;

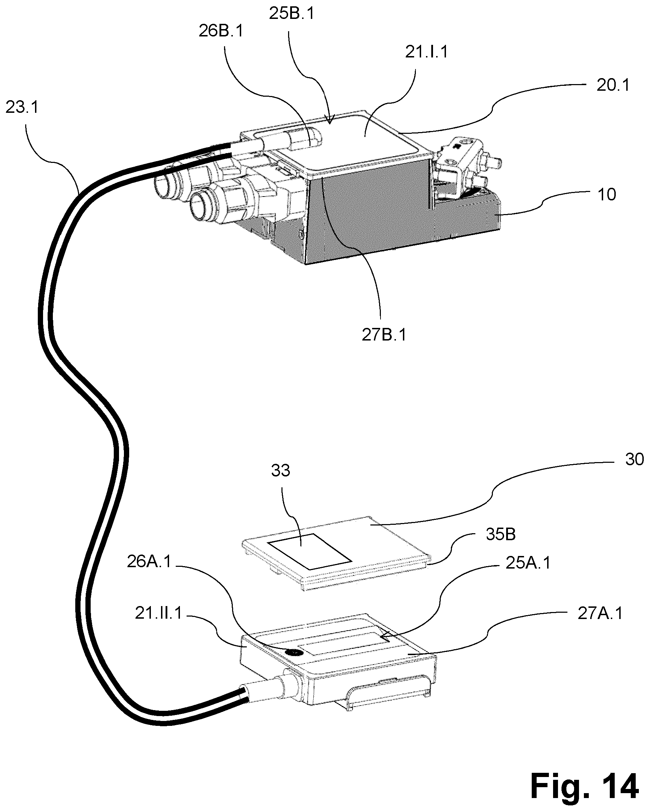

- Figure 14:: a perspective view of a further embodiment of the HVAC field device according to the present disclosure, wherein the cover HVAC device block comprises a remote extension;

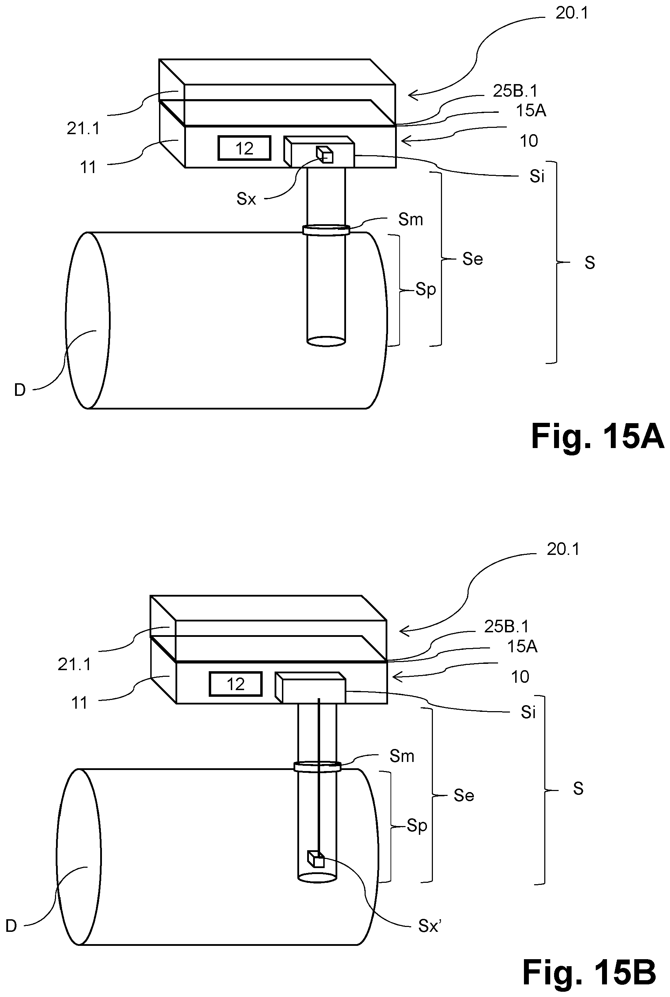

- Figure 15A:: a highly schematic perspective view of a further embodiment of the HVAC field device according to the present disclosure, the base HVAC device block being configured as a duct sensor;
- Figure 15B:: a highly schematic perspective view of a further embodiment of the HVAC field device according to the present disclosure, the base HVAC device block being configured as a duct sensor, having a sensing element Sx arranged within a sensor probe;

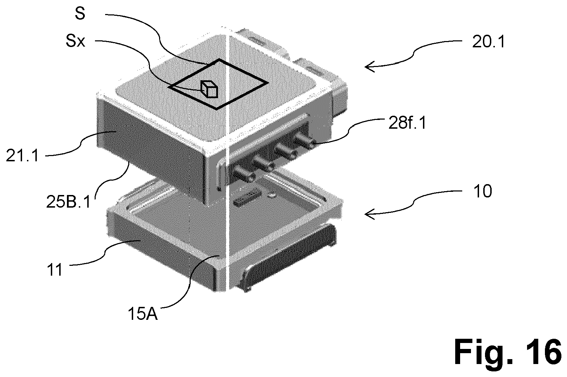

- Figure 16:: a highly schematic perspective view of a further embodiment of the HVAC field device according to the present disclosure, showing an add-on HVAC device block comprising a fluid connection interface; and

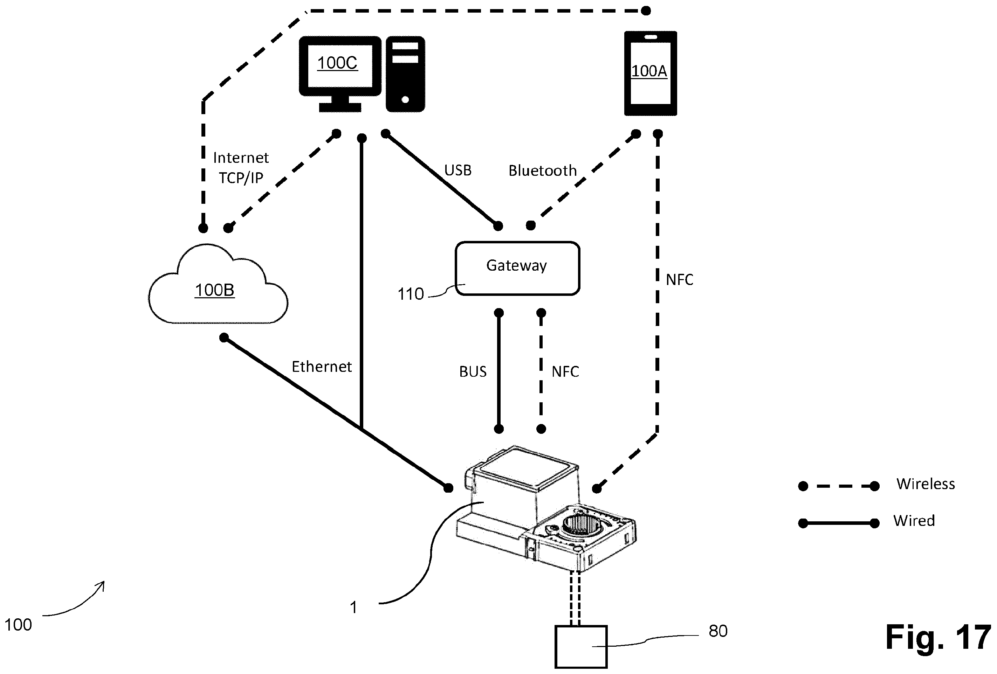

- Figure 17:: a schematic block diagram of an HVAC system, comprising an HVAC field device according to the present disclosure.

### Detailed Description

Reference will now be made in detail to certain embodiments, examples of which are illustrated in the accompanying drawings, in which some, but not all features are shown. Indeed, embodiments disclosed herein may be embodied in many different forms and should not be construed as limited to the embodiments set forth herein; rather, these embodiments are provided so that this disclosure will satisfy applicable legal requirements. Whenever possible, like reference numbers will be used to refer to like components or parts.

In the following figures, like elements of which one or more are part of embodiments disclosed herein, are denoted with a reference numeral followed by an index range, such as.1 -n, wherein n is a whole number greater than or equal to 1.

Figure 1 shows a highly schematic cross section of an embodiment of the HVAC field device 1 according to the present disclosure. According to the embodiment shown on Figure 1, the HVAC field device 1 comprises a plurality of stacked HVAC device blocks 10, 20.1. The plurality of stacked HVAC device blocks 10, 20.1 comprises a base HVAC device block 10 and an add-on HVAC device block(s) 20.1.

The base HVAC device block 10 comprises: a housing 11; an electric motor M and/or a sensor S; a connection interface 1 5A; and an electronic circuit 12 connected to the electric motor M and/or the sensor S. The electric motor M is arranged within the housing 11 and arranged - upon the HVAC field device 1 being installed - to drive an actuated part 80 - see figure 12A.

The sensor S of the base HVAC device block 10 is configured to measure an environmental parameter of an HVAC system 100, such as a temperature and/or humidity of an environment controlled by the HVAC system 100. Alternatively, or additionally, the sensor S of the base HVAC device block 10 is provided to measure operational parameters of various components of the HVAC system 100 such as an actuated position of the actuated part 80 and/or the operational state of the HVAC field device 1. According to embodiments of the present disclosure, the sensor S is located either within the housing 11 or outside the housing 11, being communicatively connected to the electronic circuit 12.

The connection interface 15A of the base HVAC device block 10 is of a first-type and is arranged in particular on an external surface of the housing 11. As shown on the embodiment of figure 1, the connection interface 15A of the first-type is arranged on a first, top surface of the housing 11Top. Depending on the particular embodiment, the electronic circuit 12 of the base HVAC device block 10 is connected either to the electric motor M and/or to the sensor S. Connected to the electric motor M, the electronic circuit 12 is configured to control the electric motor M in order to implement one or more HVAC control functions. Connected to the sensor S, the electronic circuit 12 is configured to receive and/or process signals representative of operational parameter(s) of the HVAC system 100, such as a temperature and/or humidity or signals representative of operational parameters of various components of the HVAC system 100.

The add-on HVAC device block 20.1 comprises a housing 21.1 and a connection interface 25A.1 of the first-type and a connection interface 25B.1 of a second-type. As a counterpart of the connection interface 15A of the first-type of the base HVAC device block 10, the connection interface 25B.1 of the second-type of the add-on HVAC device block 20.1 is arranged on a second, bottom side 21 Bot.1 of the housing 21.1 The connection interface 15A of the first-type of the base HVAC device block 10 and the connection interface 25B.1 of the second-type of the add-on HVAC device block 20.1 are configured to be mechanically connectable with each other.

The connection interface of the first-type 25A.1 of the add-on HVAC device block 20.1 is arranged on a first, top side 21Top.1 of its housing 21.1, the first side 21Top.1 being essentially parallel and opposite the second side 21Bot.1. Arranging complementary connection interfaces (of a first-type 25A.1 and of a second-type 25B.1) on essentially parallel and opposite sides of the housing 21.1 of the add-on HVAC device block 21.1 enables a plurality of add-on HVAC device blocks to be stacked while maintaining a constant footprint/ cross section of the resulting HVAC field device 1.

Figure 2 shows a slightly more detailed cross-section of the HVAC field device 1 according to the present disclosure, wherein the connection interfaces 15A, 25A.1 of the first-type comprise a mechanical interface 17A, 27A.1 of a first-type and the connection interface(s) 25B.1 of the second-type comprise a mechanical interface(s) 27B.1 of a second-type. The mechanical interface(s) 17A, 27A.1 of the first-type and the mechanical interface(s) 27B.1 of the second-type are configured such as to align adjacent HVAC device blocks 10, 20.1-n upon the HVAC device blocks 10, 20.1 being stacked. For a better aligning effect, according to embodiments, the mechanical interface(s) are tapered at their outer surfaces.

As shown on the embodiment of figure 2, the mechanical interfaces 17A, 27A.1 of the first-type comprise a circumferential recess arranged on the first side 11Top, 21Top.1 of the housing 11, 21.1 of the respective HVAC device block 10, 20.1 and the mechanical interface(s) 27B.1 of the second-type comprise(s) a circumferential protrusion arranged on a second side 21Bot.1 of the housing 21.1 of the respective HVAC device block 20.1. According to embodiments of the present disclosure, the circumferential protrusion is of a size essentially equal to the space within the recess of the connection interface 15A of the first-type of the base HVAC device block 10.

According to embodiments disclosed herein, the mechanical interface(s) 17A, 27A.1-n of the first-type and the mechanical interface(s) 27B.1-n of the second-type are configured to mutually interlock by an interface-fit upon the HVAC device blocks 10, 20.1-n being stacked to thereby fixedly attach the plurality of HVAC device blocks 10, 20.1 - 20-n to each other. For example, the protrusion of the mechanical interface(s) 27B.1-n of the second-type are of marginally larger dimensions than the space within the recess of the mechanical interfaces 17A, 27A.1-n of the first-type, thereby fixedly attaching upon the HVAC device blocks 10, 20.1-n being stacked, by way or a small compression and/or a small expansion of the protrusion and the recess, respectively.

As illustrated on figures 12B through 12E, in order to maximize compatibility between HVAC device blocks 10, 20.1-n, the connection interfaces 15A, 25A.1-n, in particular the mechanical interface(s) 17A, 27A.1-n of the first-type, are compatible (or even identical) irrespective of the geometry of the respective HVAC device block 10, 20.1-n.

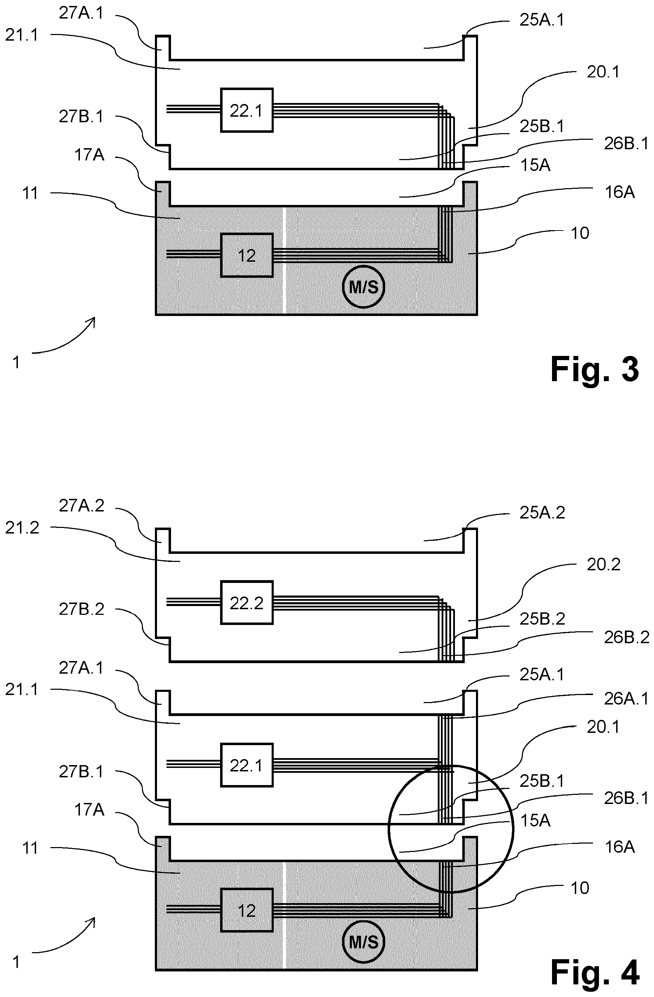

Figure 3 shows a highly schematic cross section of a further embodiment of the HVAC field device 1 according to the present disclosure, wherein the connection interface 15A of the first-type of the base HVAC device block 10 and the connection interface 25B.1 of the second-type of the add-on HVAC device block 20.1 comprise electrical interfaces 16A, 26B.1 electrically connected to the respective electronic circuit 12, 22.1. Providing electrical interfaces to the connection interface 15A of the first-type of the base HVAC device block 10 and the connection interface 25B.1 of the second-type of the add-on HVAC device block 20.1 allows the extension of the functionalities of the base HVAC device block 10 by electric functionalities provided by an add-on HVAC device block 20.1 comprising an electronic circuit 22.1.

In order to allow even further extension of the functionalities of the base HVAC device block 10 by electric functionalities provided by more than one add-on stacked HVAC device blocks 20.1-2, as shown on Figure 4 - in addition to the connection interface 15A of the first-type of the base HVAC device block 10 and the connection interface 25B.1 of the second-type of the add-on HVAC device block 20.1 - the connection interface 25A.1 of the first-type of the add-on HVAC device block 20.1 also comprises an electrical interface 26A.1 electrically connected to the electronic circuit 22.1. The electrical interfaces 26A.1 and 26B.1 of an add-on HVAC device block 20.1 are configured such as to forward data and/or electric energy between the electrical interfaces of the first-type to the electrical interfaces of the second-type, thereby allowing transfer of data and/or electric energy not only between adjacent HVAC device blocks (e.g. 10 and 20.1), but also between all HVAC device blocks 10, 20.1 and 20.2 of the HVAC field device 1, even non-adjacent HVAC device blocks (e.g. between the base HVAC device block 10 and the topmost add-on HVAC device block 20.2). In other words, data and/or electric energy are passed through by the HVAC device blocks 10, 20.1 and 20.2.

By providing the add-on HVAC device block 20.1 with mechanical and electrical connection interfaces of both first- and second-type, the add-on HVAC device block 20.1 further extends the possibility of stacking another add-on HVAC device block 20.2, irrespective whether the further add-on HVAC device block 20.2 comprises mechanical and/or electrical function, the connection interface of the second-type 25B.1 serving the purpose of connecting the add-on HVAC device block 20.1 while the connection interface 25A.1 of the first-type serving the purpose of receiving a further HVAC device block 20.2.

According to embodiments disclosed herein, the electrical connections (between interfaces and/or between interfaces and the electronic circuits) is of a bus type, in particular a bus suitable for both data communication and transmission of electrical energy (in particular at 24V).

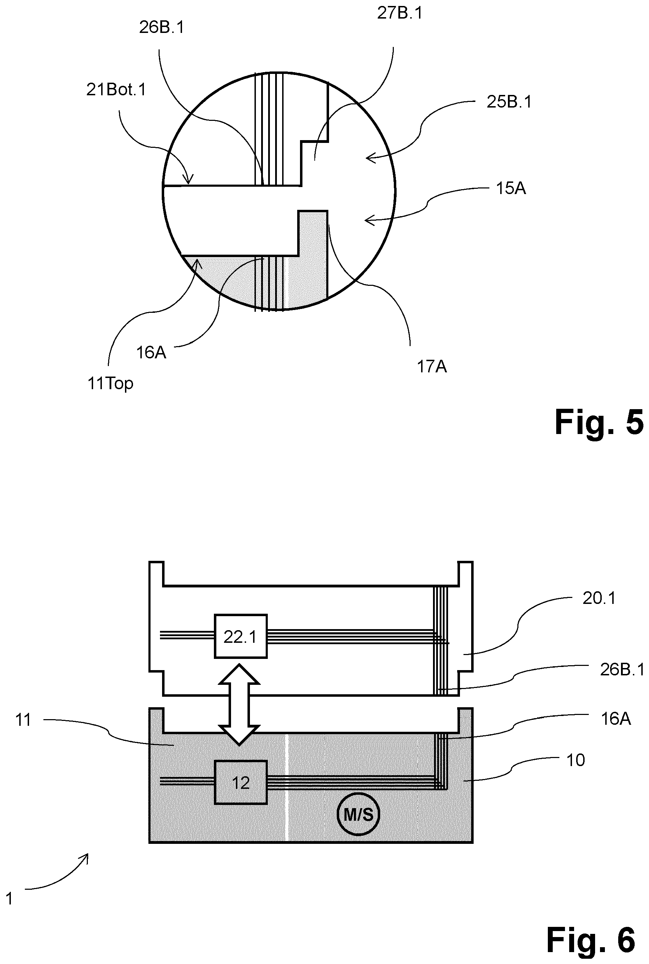

Figure 5 shows a highly schematic magnified detail of the connection interfaces of the first-type 15A and second-type 25B.1 of a base HVAC device block 10 and an add-on HVAC device block 20.1. As shown on figure 5, according to particular embodiments of the present disclosure, the mechanical interface 17A of the first-type and the electrical interface 16A of the first-type and the mechanical interface 27B.1 of the second-type and the electrical interface 27B.1 of the second-type type are arranged on the same first side respectively second side of the housings of the HVAC device blocks 10, respectively 20.1. Thereby, upon a single stacking step of the HVAC device blocks 10 and 20.1, both a mechanical and electrical connection is established between the stacked HVAC device blocks 10 and 20.1. According to the embodiment illustrated on figure 5, the electrical interface 16A of the connection interface 15A of the first-type comprises an electrical connector of a first-type arranged at the first side 11Top of the respective HVAC device block 10 while the electrical interface 26B.1 of the connection interface 25B.1 of the second-type comprises an electrical connector of a second type arranged at the second side 21Bot.1 of the add-on HVAC device block 20.1.

Turning now to Figure 6, showing a highly schematic cross section of a further embodiment of the HVAC field device 1, the concept of exchanging configuration data between HVAC device blocks shall be described. In order to enable a plug-and-play manufacture/ assembly of HVAC device blocks 10, 20.1 into an HVAC field device 1, configuration data is stored in the electronic circuit 12 of a first HVAC device block 10 while its electronic circuit 12 is configured to transmit configuration data through the electrical interface 16A. The electronic circuit 22.1 of a second HVAC device block 20.1 is configured to receive configuration data through the electrical interface 26B.1 . Configuration data of the first HVAC device block 10 is transferred to the second HVAC device block 20.1 upon the HVAC field device 1 being supplied with electrical energy. Alternatively, or additionally, the HVAC device block 10 and 20.1 are configured such as to exchange configuration data upon being stacked. As illustrated by the double block arrow, the transfer of configuration data may be - according to embodiments disclosed herein - bidirectional, that is, configuration data may be stored in the electronic circuit 22.1 of the second HVAC device block 20.1 while its electronic circuit 22.1 is configured to transmit configuration data through the electrical interface 26B.1, the electronic circuit 12 of the first HVAC device block 10 being configured to receive configuration data through the electrical interface 16A, and configuration data of the second HVAC device block 20.1 being transferred to the first HVAC device block 10 upon the HVAC field device 1 being supplied with electrical energy.

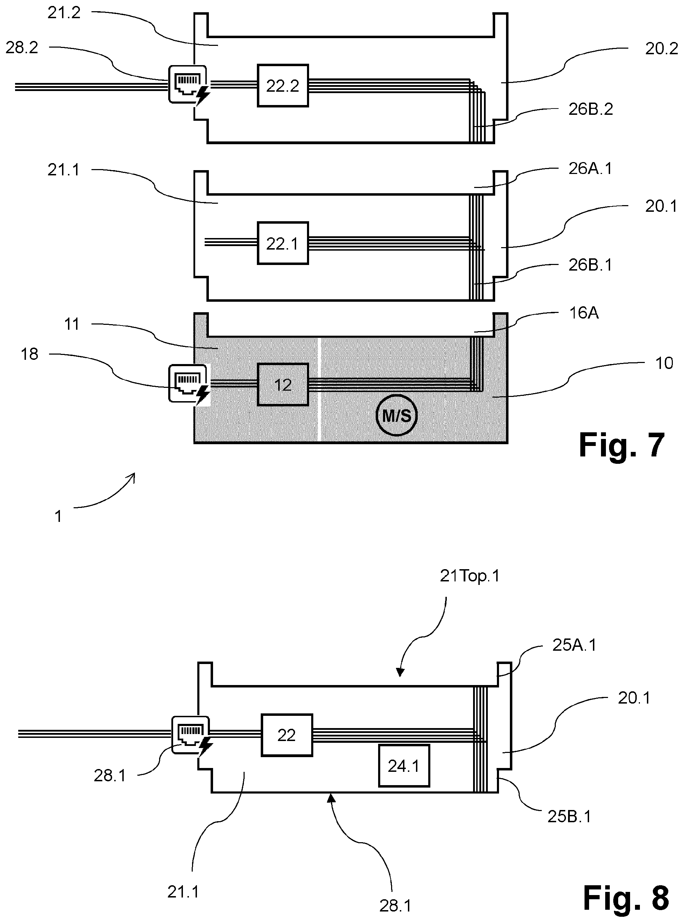

Figure 7 shows a highly schematic cross section of a further embodiment of the HVAC field device 1 according to the present disclosure. In order to enable a flexible supply of the HVAC field device 1 with electrical energy, one or more of the HVAC device blocks 10, 20.2 comprise an external electrical interface 18, 28.2. The external electrical interfaces 18, 28.2 are electrically connected to the electronic circuits 12, 22.2 of the respective HVAC device blocks 10, 20.2. The HVAC device blocks 10, 20.1 and 20.2 of the HVAC field device 1 are configured to be powered through the external electrical interface 28.2 of one of the HVAC device blocks 10, 20.2 via their respective electrical interfaces 16A, 26A.1 -2, 26B.1-n. Alternatively, or additionally, the external electrical interfaces 18, 28.2 may be used to configure any of the HVAC device blocks 10, 20.1 or 20.2 via a single interface, e.g. 28.2.

According to embodiments of the present disclosure, the external electrical interface(s) 18, 28.1-n of the HVAC device blocks 10, 20.1-n are identical or at least compatible with one certain electrical connector of a configuration device, allowing a flexible (pre)configuration of any of the HVAC device blocks 10, 20.1-n or the entire HVAC field device 1 through the external electrical interface 18, 28.1-n of any HVAC device block 10. 20.1-n.

Figure 8 shows a highly schematic cross section of an embodiment of an add-on HVAC device block 20.1 according to the present disclosure, comprising a functional extension device 24.1. The functional extension device 24.1 may comprise hardware and/or software for the extension of the mechanical and/or electrical functions of base HVAC device block 10.

In order to allow fitting various types of connection interfaces to HVAC device blocks, according to embodiments of the present disclosure, the connection interfaces are provided on so-called connection elements 19, 29.1-n.

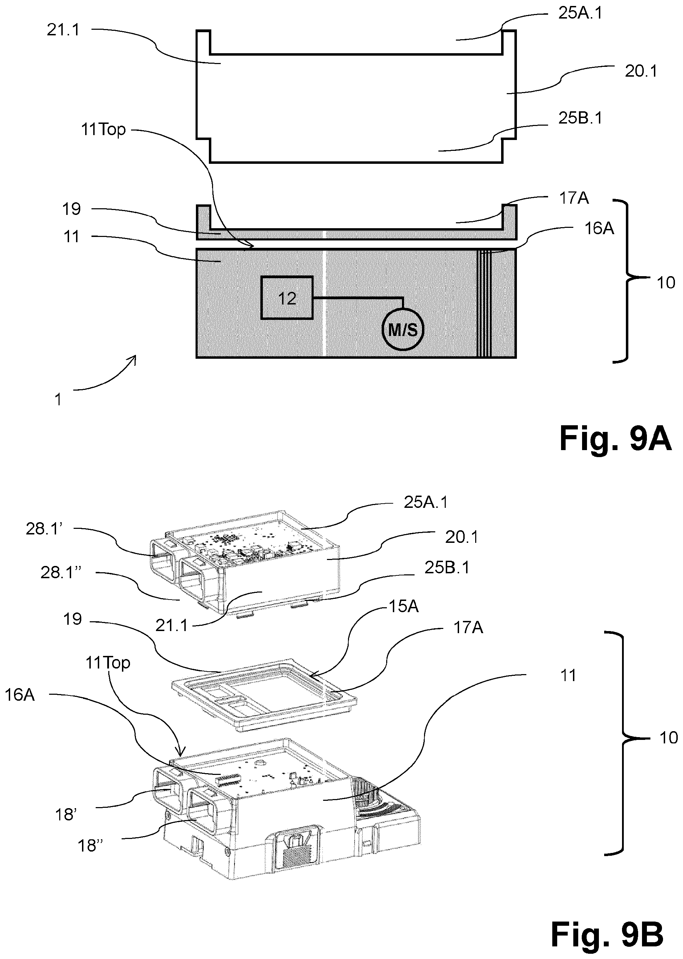

As shown on figure 9A, a connection element 19 is provided as frame-like structure to be arranged on a first, top side 11Top of the base HVAC device block 10, the connection element 19 carrying the mechanical interface of first-type 17A. The base HVAC device block 10 is then assembled by attaching the connection element 19 to the housing 11. Figure 9B shows a perspective exploded view of a base HVAC device block 10, wherein the mechanical interface of first-type 17A is provided on a connection element 19 to be attached on top of the housing 11 of the base HVAC device block 10.

As illustrated on figure 9B, according to embodiments of the present disclosure, the one or more of the HVAC device blocks 10, 20.1-n each comprise a pair of external electrical interface(s) 18', 28.1-n' and 18", 28.1-n", respectively. The pairs of two or more external electrical interfaces 18', 28.1-n' and 18", 28.1-n"are configured such as to allow Daisy-Chaining of multiple HVAC field devices 1. In particular, the two or more external electrical interfaces 18', 28.1-n' and 18", 28.1-n" are configured to communicatively and/or energetically connect a plurality of HVAC field devices using a power over data line connection such as to enable data communication between the plurality of HVAC field devices 1 and/or to enable supply of each of the plurality of HVAC field devices 1 with electrical power from a power source connected to any one of the plurality of HVAC field devices 1. According to an embodiment, the external electrical interfaces are provided with a protection against electromagnetic interference, dust, and/or water.

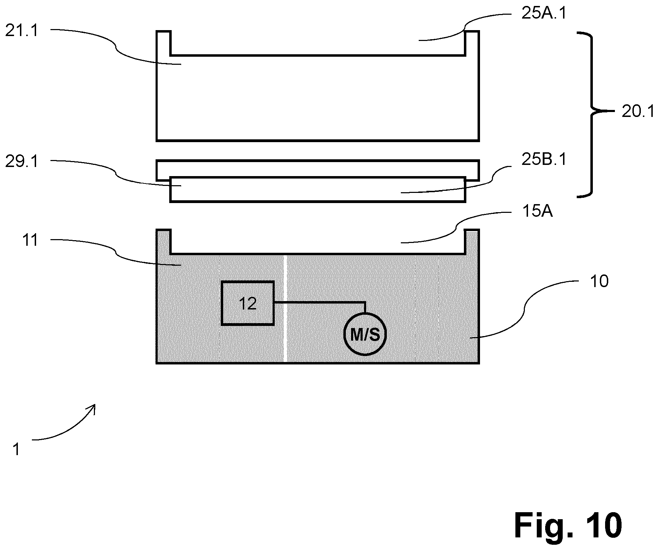

Similarly to the base HVAC device block, according to embodiments of the present disclosure, connection interface(s) of add-on HVAC device block(s) is/are provided on connection element(s). Figure 10 illustrates an embodiment of the HVAC field device 1, wherein the connection interface of the second-type 25B.1 of the add-on HVAC device block 20.1 is carried by a connection element 29.1 to be attached to the housing 21.1.

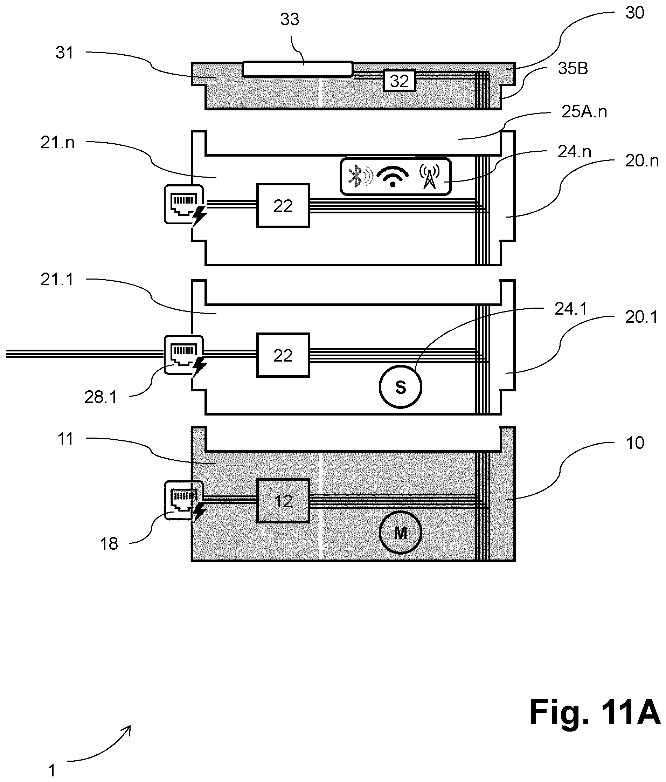

In order to avoid the outermost (on the figures the topmost) connection interface 25A.n being left exposed after the HVAC device blocks 10, 20.1-n have been stacked, as shown on figure 11A, a cover HVAC device block 30 is provided. The cover HVAC device block 30 comprises a housing 31 and a connection interface 35B of the second-type. In order to cover the connection interface 25A.n of the first-type of the outermost add-on HVAC device block 20.n, the cover HVAC device block 30 is stacked on the outermost add-on HVAC device block 20.n, thereby mechanically connecting the connection interface 35B of the second type of the cover HVAC device block 30 to the connection interface 25A.n of the first-type of the outermost add-on HVAC device block 20.n.

Figure 11A shows a highly schematic cross section of a particular embodiment of the HVAC field device 1, wherein the cover HVAC device block 30 is fitted with a human interaction device 33, e.g. a display. The human interaction device HID 33 is electrically connected to an electronic circuit 32 of the cover HVAC device block 30 and - via the electrical connection interfaces - to an electronic circuit 22.1-n of the add-on HVAC blocks 20.1-n and to the electronic circuit 12 of the base HVAC block 10. The human interaction device HID 33 is arranged to control (e.g. as a touch sensitive display or by means of buttons) and/or display operational parameters of the HVAC field device 1 or one or more of its constituent HVAC device blocks 10, 20.1-n and/or one or more of the operational parameters measured by the sensor S by means of a display screen, in particular a touch sensitive display, a low-power display such as an E-Ink display, or an status indicator such as an LED.

Also shown on figure 11A is an add-on HVAC device block 20.n comprising a communication device, in particular a communication device comprising one or more of:
- A wired communication interface (such as an Ethernet, in particular a Power over Ethernet PoE, Single Pair Ethernet SPE, a BUS, in particular an MP Bus, BACnet, KNX or Modbus interface);
- A Wide Area Network communication circuit (such as GSM, LTE, 3G, 4G or 5G mobile communications circuit);
- A Low Power Wide Area Network (such as Narrowband Internet of Things NB-loT, Long Range LoRa/ LoRaWAN, SigFox, or Long Term Evolution Category M1 LTECatM1);
- A local area network communication circuit (such as Wireless LAN);
- A short range wireless communication circuit (such as Bluetooth, Bluetooth low energy BLE, Ultra-wideband UWB, Thread and/or Zigbee); and/ or
- A close-range wireless communication circuit (such as Radio Frequency Identification RFID or a Near Field Communication NFC).

Figure 11B shows an exploded perspective view of the HVAC field device 1 of figure 11A. As illustrated, the base HVAC device block 10 as well as the add-on HVAC device blocks 20.1 and 20.n comprise external electrical interfaces 18, 28.1, 28.n. electrically connected to the electronic circuits 12, 22.1 and 22.n of the respective HVAC device blocks 10, 20.1 and 20.n. The HVAC device blocks 10, 20.1 and 20.n of the HVAC field device 1 are configured to be powered through the external electrical interface 28.1 connected by a corresponding connector 50 for powering/ configuring the HVAC field device 1 .

As shown on figure 12A, in order to separate mechanical and electric functions, not only amongst add-on HVAC device blocks 10, 20.1-n, but also within the base HVAC device block 10, the base HVAC device block 10 comprises a primary base HVAC sub-block 10.I and a secondary base HVAC sub-block 10.II. The primary base HVAC sub-block 10.I comprises the electric motor M and the electronic circuit 12, while the secondary base HVAC sub-block 10.II comprises a mechanical drive 13, which is arranged to be drivingly connected (shown with dotted lines) to an actuated part 80, such as a valve or damper. The primary base HVAC sub-block 10.I and the secondary base HVAC sub-block 10.II are connected to thereby form the base HVAC device block 10, such that the mechanical drive 13 is drivingly arranged between the electric motor M and the actuated part 80.

In particular, the mechanical drive 13 comprises a gearing, such as a reduction gearing, to convert the torque of the motor M to the specific requirements of actuating the actuated part 80. Figures 12B-E shows perspective views of base HVAC device blocks 10 having different variants of a secondary base HVAC sub-block 10.II, each having a mechanical drive 13 providing a different output torque (ranging from 1-40Nm) to drive an actuated part 80. Parts of the mechanical drive 13 may be however part of the primary base HVAC sub-block 10.I. According to embodiments of the present disclosure, the secondary base HVAC sub-block 10.II comprises a gear release, position switch(es) and/or a position feedback sensor.

Figures 13A to D depict a further embodiment of the HVAC field device 1 according to the present disclosure, comprising an asymmetric add-on HVAC device block 20.1. An asymmetric add-on HVAC device block 20.1 is characterized in that the connection interface of the first-type 25A.1 and the connection interface of the second-type 25B.1 extend from a side of the housing 21.1. According to embodiments of the present disclosure, the housing 21.1 of an asymmetric add-on HVAC device block 20.1 extends beyond the plane defined by the connection interface 25A.1 of the first-type and/or the plane defined by the connection interface 25B.1 of the second-type. Furthermore, the connection interfaces 25A.1 and 25B.1 are arranged in close proximity or even in direct contact to each other, thereby minimizing the height increase upon stacking the add-on HVAC device 20.1 onto the base HVAC device block 10.

Figures 13B and 13C show a perspective view respectively a cross-section of the asymmetric add-on HVAC device block 20.1 of figure 13A, illustrating how the connection interface of first-type 25A.1 and the connection interface of the second-type 25B.1 extend from a side of the housing 21.1.

Figure 13D shows a perspective view of the stacked HVAC field device 1 of figures 13A and C, illustrating the space-saving manner of how the asymmetric add-on HVAC device block 20.1 is stacked onto the base HVAC device block 10. The asymmetric add-on HVAC device block 20.1 is advantageous when the base HVAC device block 10 has a significantly larger cross-section than required by the add-on HVAC device blocks.

In order to allow the extension of the functions of an HVAC field device even in the absence of physical space around the HVAC field device (when installed) and to allow access to add-on HVAC device blocks in HVAC systems where the HVAC field device, in particular the base HVAC device block is installed at a difficult to access location, according to embodiments disclosed herein, one or more of the add-on HVAC device blocks is/are divided into two structural parts which can be arranged offset/ remote one from the other. As shown on figure 14, the housing 21.1 of the respective add-on HVAC device block 20.1 is divided into a first housing part 21.I and a second housing part 21.II.1. The first housing part 21.I.1 accommodates the connection interface 25B.1 of the second-type so that the first housing part 21.I.1 can be stacked onto the base HVAC device block 10 (or onto another add-on HVAC device block). The second housing part 21.II.1 accommodates the connection interface 25A.1 of the first-type, the electrical interface 26A.1 of the connection interface 25A.1 of the first-type being electrically connected to the electrical interface 26B.1 of the connection interface 25B.1of the second-type by an electrical extension link 23.1, in particular a flexible electrical extension link, so that further HVAC device blocks - in particular a cover HVAC device block 30 having a human interaction device HID 33- can be stacked onto the second housing part 21.11.1. According to embodiments of the present disclosure, the first housing part 21.I.1 is configured to act as a cover of the base HVAC device block 10 (or for an add-on HVAC device block on which it is stacked).

Figure 15A illustrates a further embodiment of the HVAC field device 1 according to the present disclosure, the base HVAC device block 10 being configured as a duct sensor such as a duct sensor for the measurement of temperature, relative humidity, dew point, CO₂, VOC's, and/or pressure. As illustrated, the base HVAC device block 10 comprises a sensor S communicatively connected to the electronic circuit 12. The sensor S comprises a first sensor part Si and a second sensor part Se, the first sensor part Si being arranged within the housing 11 of the base HVAC device block 10, while the second sensor part Se being arranged at least partially extending from the housing 11 of the base HVAC device block 10. When the HVAC field device 1 is attached to a duct/pipe D, at least a part of the second sensor part Se, referred to as sensor probe Sp, extends into the duct/pipe D.

For the measurement of the respective measure environmental variable(s), the sensor S comprises a sensing element Sx, Sx'. Depending on the measured environmental parameter(s), the sensing element Sx is arranged within the first sensor part Si within the housing 11 and fluidly connected by the second sensor part Se to the sensor probe P so that samples of a fluid flowing through the duct/pipe D are directed to the sensing element Sx.

Alternatively, or additionally, as shown on figure 15B, the sensing element Sx' is arranged within the second sensor part Se, in particular within the sensor probe P and hence exposed to the fluid flowing through the duct/pipe D.

Optionally, the sensor S comprises a duct mounting element Sm configured to allow adjustment to different duct/pipe geometries. In particular, the duct mounting element Sm is provided to allow the HVAC field device 1 being attached to a duct or pipe such that a sensing element Sx of the second sensor part Se to be placed in a center of the duct/pipe D.

Figure 16 shows a highly schematic perspective view of a further embodiment of the HVAC field device 1 according to the present disclosure, an add-on HVAC device block 20.1 comprising a fluid connection interface 28f.1 being attached to a base HVAC device block 10. A fluid connection interface 28f.1 - having one or more fluid connection(s) - is provided to fluidly connect a sensing element Sx (of a sensor S) located within the housing 21.1 of an HVAC device block 20.1 with a measurement point. In particular, the fluid connection interface 28f.1 comprises two or more fluid connections for fluidly connecting the sensor S with a plurality of measurement points for the measurement of pressure differential between said measurement points.

Turning now to figure 17, an HVAC system 100 shall be described, comprising an HVAC field device 1 according to the present disclosure. The HVAC system 100 comprises one or more external computing devices 100A - C, such as a remote server 100B communicatively connected with the HVAC field device 1 using a radio communication circuit of one or more of the add-on HVAC device block(s) 20.1-n. Additionally, or alternatively, the HVAC field device 1 is configured to establish a communication link with a mobile computing device 100A using radio communication circuits of one or more of the add-on HVAC device block(s) 20.1-n, in particular a Near Field Communication NFC and/or a Bluetooth Low Energy BLE and/or a Wireless Local Area Network WLAN communication circuit. The HVAC field device 1 is further connectable (using communication circuits and/or the external electrical interface 18, 28.1-n of one or more of the add-on HVAC device block(s) 20.1-n) to a control terminal 100C, such as a computer running a Building Management System BMS, either directly or via a gateway device 110 using a wired (such as a BUS connection) or a wireless connection (such as NFC).

### List of reference numerals

| | | |
|---|---|---|
| HVAC field device | | 1 |
| HVAC device blocks | | 10, 20.1-n |
| base HVAC device block | | 10 |
| | primary base HVAC device block | 10.I |
| | secondary base HVAC device block | 10.II |
| | housing (of base HVAC device block) | 11 |
| | first side (of housing of base HVAC device block) | 11Top |
| | electronic circuit (of base HVAC device block) | 12 |
| | mechanical drive (of secondary base HVAC device block) | 13 |
| | connection interface of first-type (of base HVAC device block) | 15A |
| | electrical interface of first-type (of base HVAC device block) | 16A |
| | mechanical interface of first-type (of base HVAC device block) | 17A |
| | external electrical interface (of base HVAC device block) | 18 |
| | connection element (of base HVAC device block) | 19 |
| | electric motor (of base HVAC device block) | M |
| | sensor (of base HVAC device block) | S |
| | first sensor part (of sensor) | Si |
| | second sensor part (of sensor) | Se |
| | duct mounting element | Sm |
| | sensor probe | Sp |
| | sensing element | Sx, Sx' |
| | duct | D |
| add-on HVAC device block | | 20.1-n |
| | housing (of add-on HVAC device block) | 21.1-n |
| | first side (of housing of add-on HVAC device block) | 21Top.1-n |
| | second side (of housing of add-on HVAC device block) | 21Bot.1-n |
| | electronic circuit (of add-on HVAC device block) | 22.1-n |
| | electrical extension link | 23.1-n |
| | functional extension device | 24.1-n |
| | connection interface of first-type (of add-on HVAC device block) | 25A.1-n |
| | connection interface of second-type (of add-on HVAC device block) | 25B.1-n |
| | electrical interface of first-type (of add-on HVAC device block) | 26A.1-n |
| | electrical interface of second-type (of add-on HVAC device block) | 26B.1-n |
| | mechanical interface of first-type (of add-on HVAC device block) | 27A.1-n |
| | mechanical interface of second-type (of add-on HVAC device block) | 27B.1-n |
| | external electrical interface (of add-on HVAC device block) | 28.1-n |
| | connection element (of add-on HVAC device block) | 29.1-n |
| | fluidic connection interface | 28f.1-n |
| cover HVAC device block | | 30 |
| | housing (of cover HVAC device block) | 31 |
| | electronic circuit (of cover HVAC device block) | 32 |
| | human interaction device HID (of cover HVAC device block) | 33 |
| | connection interface of second-type (of cover HVAC device block) | 35B |
| | connection interface of first-type (of cover HVAC device block) | 36B |
| | remote extension | 38 |
| connector (for power supply and/or configuration) | | 50 |
| actuated part | | 80 |
| HVAC system | | 100 |
| remote server | | 100B |
| control terminal | | 100C |
| gateway device | | 110 |

## Claims

1. A method of manufacturing an HVAC field device (1) from a plurality of HVAC device blocks (10, 20.1-n), comprising the steps:
a) providing a base HVAC device block (10) comprising:
- a housing (11);
- an electric motor (M) arranged within the housing (11) to drive an actuated part (80), such as a valve or damper, located outside the housing (11) and mechanically connectable to the HVAC field device (1), and/or a sensor (S) configured to measure an environmental parameter of an HVAC system (100);
- a connection interface (15A) of a first-type;
- an electronic circuit (12) connected to the electric motor (M) and/or the sensor (S);
b) providing one or more add-on HVAC device block(s) (20.1 -n), each comprising:
- a housing (21.1-n);
- a connection interface (25A.1-n) of the first-type;
- a connection interface (25B.1-n) of a second-type,
wherein the connection interfaces (15A, 25A.1n) of the first-type and the connection interface(s) (25B.1-n) of the second-type are configured to be mechanically connectable with each other; and
c) stacking the base HVAC device block (10) and the one or more add-on HVAC device block(s) ( 20.1-n), thereby mechanically connecting the connection interface (15A, 25A.1-n) of the first type to the connection interface (25B.1-n) of the second type of adjacent HVAC device blocks (10, 20.1 -n).

2. The method according to claim 1, wherein the connection interfaces (15A, 25A.1-n) of the first-type comprise a mechanical interface (17A, 27A.1-n) of a first-type and the connection interface(s) (25B.1-n) of the second-type comprise a mechanical interface(s) (27B.1-n) of a second-type, configured such as to align and/or mutually interlock adjacent HVAC device blocks (10, 20.1 -n) upon the HVAC device blocks (10, 20.1-n) being stacked, e.g. to mutually interlock by an interface-fit upon the HVAC device blocks (10, 20.1-n) being stacked to thereby fixedly attach the plurality of HVAC device blocks (10, 20.1 - 20-n) to each other.

3. The method according to claim 2, wherein:
- the add-on HVAC device block(s) (20.1-n) further comprise an electronic circuit (22.1-n); and
- the connection interface (15A) of the first-type of the base HVAC device block (10) and the connection interface(s) (25B.1-n) of the second-type of the add-on HVAC device block(s) (20.1-n) comprise electrical interfaces (16A, 26B.1-n) electrically connected to the respective electronic circuit (12, 22.1-n), configured to be electrically connectable to each other, wherein stacking the plurality of HVAC device blocks (10, 20.1-n) further comprises electrically connecting the plurality of HVAC device blocks (10, 20.1-n) to each other via the electrical interfaces (16A, 26A.1-n, 26B.1-n) of adjacent HVAC device blocks (10, 20.1 -n) to thereby allow transfer of data and/or electric energy therebetween.

4. The method according to claim 2, wherein:
- the add-on HVAC device block(s) (20.1-n) each further comprise an electronic circuit (22.1-n);
- the connection interfaces (15A, 25A.1-n, 25B.1-n) each comprise an electrical interface (16A, 26A.1-n, 26B.1-n) electrically connected to the respective electronic circuit (12, 22.1-n), the connection interfaces (15A, 25A.1-n, 25B.1-n) being configured to be electrically connectable to each other.

5. The method according to one of the claims 3 or 4, further comprising the steps of:
- storing configuration data in the electronic circuit (12, 22.1-n) of a first of the plurality of HVAC device blocks (10, 20.1-n) and configuring the electronic circuit (12, 22.1-n) to transmit configuration data through the electrical interface (16A, 26A.1-n, 26B.1-n) of the first of the plurality of HVAC device blocks (10, 20.1-n); and
- configuring the electronic circuit (12, 22.1-n) of a second of the plurality of HVAC device blocks (10, 20.1-n), different from the first of the plurality of HVAC device blocks (10, 20.1-n), to receive configuration data through the electrical interface (16A, 26A.1-n, 26B.1-n) of the second of the plurality of HVAC device blocks (10, 20.1-n).

6. The method according to claim 5, further comprising the step of causing configuration data of the first of the plurality of HVAC device blocks (10, 20.1-n) to be transferred to the second of the plurality of HVAC device blocks (10, 20.1-n) upon the HVAC field device (1) being supplied with electrical energy.

7. The method according to one of the claims 3 to 6, further comprising the steps:
d) providing an external electrical interface (18, 28.1-n) to at least one of the HVAC device block(s) (10, 20.1-n), the external electrical interface (18, 28.1-n) being connected to the electronic circuit (12, 22.1-n) of the at least one of the HVAC device block(s) (10, 20.1-n); and
e) configuring more than one of the plurality of HVAC device blocks (10, 20.1-n) of the HVAC field device (1) to be powered with electrical energy and/or configured through the external electrical interface (18, 28.1-n) of the at least one of the HVAC device blocks (10, 20.1-n) via their respective electrical interfaces (16A, 26A.1-n, 26B.1-n).

8. The method according to one of the claims 3 to 7, wherein the housing (21.1-n) of one or more of the add-on HVAC device block(s) (20.1-n) comprises:
- a first housing part (21.I.1-n) accommodating the connection interface (25B.1-n) of the second-type;
- a second housing part (21.II.1-n) accommodating the connection interface (25A.1-n) of the first-type,
wherein the electrical interface (26A.1-n) of the connection interface (25A.1-n) of the first-type is electrically connected to the electrical interface (26B.1-n) of the connection interface (25B.1-n) of the second-type by an electrical extension link (23.1-n), in particular a flexible electrical extension link (23.1-n).

9. The method according to one of the claims 1 to 8, wherein the one or more add-on HVAC device block(s) (20.1-n) comprise one or more functional extension device(s) (24.1-n) selected from the list comprising:
- a processing device, such as a microcontroller for providing computing power to the HVAC field device (1);
- a mechanical performance device;
- a controller device, implementing HVAC control functions, such as a proportional P, a proportional-integral PI, a proportional-integral-derivative PID, an integral I and/or a neural network based control;
- a communication device, comprising a wired communication interface and/or a radio communication device;
- an energy storage device, comprising a capacitive storage device and/or an electro-chemical storage device;
- a sensor device, comprising one or more sensors for the measurement of a parameter of an HVAC system (100);
- an HVAC interface device, comprising an interface to a damper and/or pipe of an HVAC system (100);
- a position feedback device of the actuated part (80);
- an electrical power supply device, for providing external electrical power to the HVAC field device;
- a monitoring/ service device, for performing specific service and data logging function(s); and/or
- a display device.

10. An HVAC field device (1) comprising:
- a base HVAC device block (10) comprising:
- a housing (11);
- an electric motor (M) arranged within the housing (11) to drive an actuated part (80), such as a valve or damper, located outside the housing (11) and mechanically connectable to the HVAC field device (1), and/or a sensor (S) configured to measure an environmental parameter of an HVAC system (100);
- a connection interface (15A) of a first-type;
- an electronic circuit (12) connected to the electric motor (M) and/or the sensor (S);
- one or more add-on HVAC device block(s) (20.1-n), each comprising:
- a housing (21.1-n);
- a connection interface (25A.1-n) of the first-type;
- a connection interface (25B.1-n) of a second-type,
wherein the connection interfaces (15A, 25A.1n) of the first-type and the connection interface(s) (25B.1-n) of the second-type are configured to be mechanically connectable with each other; and
wherein, the base HVAC device block (10) and the one or more add-on HVAC device block(s) (20.1-n) are stacked such that the connection interface (15A, 25A.1-n) of the first type are mechanically connected to the connection interface (25B.1-n) of the second type of adjacent HVAC device blocks (10, 20.1 -n).

11. The HVAC field device (1) according to claim 10, wherein the connection interfaces (15A, 25A.1-n) of the first-type comprise a mechanical interface (17A, 27A.1-n) of a first-type and the connection interface(s) (25B.1-n) of the second-type comprise a mechanical interface(s) (27B.1-n) of a second-type, configured such as to align and/or mutually interlock adjacent HVAC device blocks (10, 20.1 -n) upon the HVAC device blocks (10, 20.1-n) being stacked, e.g. to mutually interlock by an interface-fit upon the HVAC device blocks (10, 20.1-n) being stacked to thereby fixedly attach the plurality of HVAC device blocks (10, 20.1 - 20-n) to each other.

12. The HVAC field device (1) according to claim 11, wherein:
- the add-on HVAC device block(s) (20.1-n) further comprise an electronic circuit (22.1-n); and
- the connection interface (15A) of the first-type of the base HVAC device block (10) and/or the connection interface(s) (25B.1-n) of the second-type of one or more of the add-on HVAC device block(s) (20.1-n) comprise electrical interfaces (16A, 26B.1-n) electrically connected to the respective electronic circuit (12, 22.1-n), configured to be electrically connectable to each other, wherein the plurality of HVAC device blocks (10, 20.1-n) are electrically connected to each other via the electrical interfaces (16A, 26A.1-n, 26B.1-n) of adjacent HVAC device blocks (10, 20.1 -n) to thereby allow transfer of data and/or electric energy therebetween.

13. The HVAC field device (1) according to claim 11, wherein:
- the add-on HVAC device block(s) (20.1-n) each further comprise an electronic circuit (22.1-n);
- the connection interfaces (15A, 25A.1-n, 25B.1-n) each comprise an electrical interface (16A, 26A.1-n, 26B.1-n) electrically connected to the respective electronic circuit (12, 22.1-n), the connection interfaces (15A, 25A.1-n, 25B.1-n) being configured to be electrically connectable to each other.

14. The HVAC field device (1) according to claim 12 or 13, wherein:
- the electronic circuit (12, 22.1-n) of a first of the plurality of HVAC device blocks (10, 20.1-n) is configured to transmit configuration data stored therein through the electrical interface (16A, 26A.1 -n, 26B.1-n) of the first of the plurality of HVAC device blocks (10, 20.1-n); and
- the electronic circuit (12, 22.1-n) of a second of the plurality of HVAC device blocks (10, 20.1-n), different from the first of the plurality of HVAC device blocks (10, 20.1-n), is configured to receive configuration data through the electrical interface (16A, 26A.1-n, 26B.1-n) of the second of the plurality of HVAC device blocks (10, 20.1-n).

15. The HVAC field device (1) according to claim 14, further configured to transfer configuration data of the first of the plurality of HVAC device blocks (10, 20.1-n) to the second of the plurality of HVAC device blocks (10, 20.1-n) upon the HVAC field device (1) being supplied with electrical energy.

16. The HVAC field device (1) according to one of the claims 12 to 15, wherein:
d) at least one of the HVAC device blocks (10, 20.1-n) comprises an external electrical interface (18, 28.1-n); and
e) more than one of the plurality of HVAC device blocks (10, 20.1-n) of the HVAC field device (1) are configured to be powered and/or configurable through the external electrical interface (18, 28.1-n) of the at least one of the HVAC device blocks (10, 20.1-n) via their respective electrical interfaces (16A, 26A.1-n, 26B.1-n).

17. The HVAC field device (1) according to one of the claims 12 to 16, wherein the housing (21.1-n) of one or more of the add-on HVAC device block(s) (20.1-n) comprises:
- a first housing part (21.l.1-n) accommodating the connection interface (25B.1-n) of the second-type;
- a second housing part (21.ll.1-n) accommodating the connection interface (25A.1-n) of the first-type,
wherein the electrical interface (26A.1-n) of the connection interface (25A.1-n) of the first-type is electrically connected to the electrical interface (26B.1-n) of the connection interface (25B.1-n) of the second-type by an electrical extension link (23.1-n), in particular a flexible electrical extension link (23.1-n).

18. The HVAC field device (1) according to one of the claims 10 to 17, wherein the one or more add-on HVAC device block(s) (20.1-n) comprise one or more functional extension device(s) (24.1-n) selected the list comprising:
- a processing device, such as a microcontroller for providing computing power to the HVAC field device (1);
- a mechanical performance device;
- a controller device, implementing HVAC control functions, such as a proportional P, a proportional-integral PI, a proportional-integral-derivative PID, an integral I and/or a neural network based control;
- a communication device, comprising a wired communication interface and/or a radio communication device;
- an energy storage device, comprising a capacitive storage device and/or an electro-chemical storage device;
- a sensor device, comprising one or more sensors for the measurement of a parameter of an HVAC system (100);
- an HVAC interface device, comprising an interface to a damper and/or pipe of an HVAC system (100);
- a position feedback device of the actuated part (80);
- an electrical power supply device, for providing external electrical power to the HVAC field device;
- a monitoring/ service device, for performing specific service and data logging function(s); and/or
- a display device.

19. An HVAC system (100) comprising:
- an HVAC field device (1) according to one of the claims 10 to 18; and
- an actuated part (80), such as a valve and/or a damper, drivingly connected to the electric motor (M) of the base HVAC device block (10) of the HVAC field device (1).

## Patentansprüche

1. Ein Verfahren zur Herstellung eines HLK-Feldgeräts (1) aus einer Vielzahl von HLK-Geräteblöcken (10, 20.1-n), umfassend die Schritte:
a) Bereitstellen eines Basis-HLK-Geräteblocks (10), umfassend:
- ein Gehäuse (11);
- einen Elektromotor (M), der innerhalb des Gehäuses (11) angeordnet ist, um ein betätigtes Teil (80), wie z. B. ein Ventil oder eine Klappe, das sich ausserhalb des Gehäuses (11) befindet und mechanisch mit dem HLK-Feldgerät (1) verbindbar ist, anzutreiben, und/oder einen Sensor (S), der so konfiguriert ist, dass er einen Umgebungsparameter eines HLK-Systems (100) misst;
- eine Verbindungsschnittstelle (15A) eines ersten Typs;
- eine elektronische Schaltung (12), die mit dem Elektromotor (M) und/oder dem Sensor (S) verbunden ist;
b) Bereitstellen eines oder mehrerer Zusatz-HLK-Geräteblock(s) (20.1-n), die jeweils umfassen:
- ein Gehäuse (21.1-n);
- eine Verbindungsschnittstelle (25A.1-n) des ersten Typs;
- eine Verbindungsschnittstelle (25B.1-n) eines zweiten Typs,
wobei die Verbindungsschnittstellen (15A, 25A.1n) des ersten Typs und die Verbindungsschnittstelle(n) (25B.1-n) des zweiten Typs so konfiguriert sind, dass sie mechanisch miteinander verbindbar sind; und
c) Stapeln des Basis-HLK-Geräteblocks (10) und des/der einen oder mehreren Zusatz-HLK-Geräteblock(s) (20.1-n), wodurch die Verbindungsschnittstelle (15A, 25A.1-n) des ersten Typs mechanisch mit der Verbindungsschnittstelle (25B.1-n) des zweiten Typs benachbarter HLK-Geräteblöcke (10, 20.1-n) verbunden wird.

2. Das Verfahren nach Anspruch 1, wobei die Verbindungsschnittstellen (15A, 25A.1-n) des ersten Typs eine mechanische Schnittstelle (17A, 27A.1-n) eines ersten Typs umfassen und die Verbindungsschnittstelle(n) (25B.1-n) des zweiten Typs eine mechanische Schnittstelle(n) (27B.1-n) eines zweiten Typs umfassen, die so konfiguriert sind, dass sie benachbarte HLK-Geräteblöcke (10, 20.1-n) beim Stapeln der HLK-Geräteblöcke (10, 20.1-n) ausrichten und/oder gegenseitig ineinandergreifen, z. B. um durch eine Passung beim Stapeln der HLK-Geräteblöcke (10, 20.1-n) gegenseitig ineinanderzugreifen, um dadurch die Vielzahl der HLK-Geräteblöcke (10, 20.1-20-n) fest miteinander zu verbinden.

3. Das Verfahren nach Anspruch 2, wobei:
- der/die Zusatz-HLK-Geräteblock(s) (20.1-n) ferner eine elektronische Schaltung (22.1-n) umfassen; und
- die Verbindungsschnittstelle (15A) des ersten Typs des Basis-HLK-Geräteblocks (10) und die Verbindungsschnittstelle(n) (25B.1-n) des zweiten Typs des/der Zusatz-HLK-Geräteblock(s) (20.1-n) elektrische Schnittstellen (16A, 26B.1-n) umfassen, die elektrisch mit der jeweiligen elektronischen Schaltung (12, 22.1-n) verbunden und so konfiguriert sind, dass sie elektrisch miteinander verbindbar sind, wobei das Stapeln der Vielzahl von HLK-Geräteblöcken (10, 20.1-n) ferner das elektrische Verbinden der Vielzahl von HLK-Geräteblöcken (10, 20.1-n) miteinander über die elektrischen Schnittstellen (16A, 26A.1-n, 26B.1-n) benachbarter HLK-Geräteblöcke (10, 20.1-n) umfasst, um dadurch den Transfer von Daten und/oder elektrischer Energie dazwischen zu ermöglichen.

4. Das Verfahren nach Anspruch 2, wobei:
- der/die Zusatz-HLK-Geräteblock(s) (20.1-n) jeweils ferner eine elektronische Schaltung (22.1-n) umfassen;
- die Verbindungsschnittstellen (15A, 25A.1-n, 25B.1-n) jeweils eine elektrische Schnittstelle (16A, 26A.1-n, 26B.1-n) umfassen, die elektrisch mit der jeweiligen elektronischen Schaltung (12, 22.1-n) verbunden ist, wobei die Verbindungsschnittstellen (15A, 25A.1-n, 25B.1-n) so konfiguriert sind, dass sie elektrisch miteinander verbindbar sind.

5. Das Verfahren nach einem der Ansprüche 3 oder 4, ferner umfassend die Schritte:
- Speichern von Konfigurationsdaten in der elektronischen Schaltung (12, 22.1-n) eines ersten der Vielzahl von HLK-Geräteblöcken (10, 20.1-n) und Konfigurieren der elektronischen Schaltung (12, 22.1-n) zum Übertragen von Konfigurationsdaten über die elektrische Schnittstelle (16A, 26A.1-n, 26B.1-n) des ersten der Vielzahl von HLK-Geräteblöcken (10, 20.1-n); und
- Konfigurieren der elektronischen Schaltung (12, 22.1-n) eines zweiten der Vielzahl von HLK-Geräteblöcken (10, 20.1-n), der sich von dem ersten der Vielzahl von HLK-Geräteblöcken (10, 20.1-n) unterscheidet, zum Empfangen von Konfigurationsdaten über die elektrische Schnittstelle (16A, 26A.1-n, 26B.1-n) des zweiten der Vielzahl von HLK-Geräteblöcken (10, 20.1-n).

6. Das Verfahren nach Anspruch 5, ferner umfassend den Schritt, die Übertragung von Konfigurationsdaten des ersten der Vielzahl von HLK-Geräteblöcken (10, 20.1-n) an den zweiten der Vielzahl von HLK-Geräteblöcken (10, 20.1-n) zu veranlassen, sobald das HLK-Feldgerät (1) mit elektrischer Energie versorgt wird.

7. Das Verfahren nach einem der Ansprüche 3 bis 6, ferner umfassend die Schritte:
d) Bereitstellen einer externen elektrischen Schnittstelle (18, 28.1-n) an mindestens einem der HLK-Geräteblock(s) (10, 20.1-n),wobei die externe elektrische Schnittstelle (18, 28.1-n) mit der elektronischen Schaltung (12, 22.1-n) des mindestens einen der HLK-Geräteblock(s) (10, 20.1-n) verbunden ist; und
e) Konfigurieren von mehr als einem der Vielzahl von HLK-Geräteblöcken (10, 20.1-n) des HLK-Feldgeräts (1) zur Stromversorgung mit elektrischer Energie und/oder zur Konfiguration über die externe elektrische Schnittstelle (18, 28.1-n) des mindestens einen der HLK-Geräteblöcke (10, 20.1-n) über deren jeweilige elektrische Schnittstellen (16A, 26A.1-n, 26B.1-n).

8. Das Verfahren nach einem der Ansprüche 3 bis 7, wobei das Gehäuse (21.1-n) eines oder mehrerer der Zusatz-HLK-Geräteblock(s) (20.1-n) umfasst:
- einen ersten Gehäuseteil (21.I.1-n), der die Verbindungsschnittstelle (25B.1-n) des zweiten Typs aufnimmt;
- einen zweiten Gehäuseteil (21.II.1-n), der die Verbindungsschnittstelle (25A.1-n) des ersten Typs aufnimmt,
wobei die elektrische Schnittstelle (26A.1-n) der Verbindungsschnittstelle (25A.1-n) des ersten Typs elektrisch mit der elektrischen Schnittstelle (26B.1-n) der Verbindungsschnittstelle (25B.1-n) des zweiten Typs durch eine elektrische Verlängerungsverbindung (23.1-n), insbesondere eine flexible elektrische Verlängerungsverbindung (23.1-n), verbunden ist.

9. Das Verfahren nach einem der Ansprüche 1 bis 8, wobei der/die eine oder mehrere Zusatz-HLK-Geräteblock(s) (20.1-n) eine oder mehrere funktionale Erweiterungsvorrichtung(en) (24.1-n) umfassen, ausgewählt aus der Liste, die Folgendes umfasst:
- eine Verarbeitungsvorrichtung, wie z. B. ein Mikrocontroller zur Bereitstellung von Rechenleistung für das HLK-Feldgerät (1);
- eine mechanische Leistungsvorrichtung;
- eine Steuerungsvorrichtung, die HLK-Steuerfunktionen implementiert, wie z. B. eine proportionale P-, eine proportional-integrale Pl-, eine proportional-integral-derivative PID-, eine integrale I- und/oder eine auf neuronalen Netzen basierende Steuerung;
- eine Kommunikationsvorrichtung, umfassend eine drahtgebundene Kommunikationsschnittstelle und/oder eine Funkkommunikationsvorrichtung;
- eine Energiespeichervorrichtung, umfassend eine kapazitive Speichervorrichtung und/oder eine elektrochemische Speichervorrichtung;
- eine Sensorvorrichtung, umfassend einen oder mehrere Sensoren zur Messung eines Parameters eines HLK-Systems (100);
- eine HLK-Schnittstellenvorrichtung, umfassend eine Schnittstelle zu einer Klappe und/oder einem Rohr eines HLK-Systems (100);
- eine Positionsrückmeldevorrichtung des betätigten Teils (80);
- eine elektrische Stromversorgungsvorrichtung zur Bereitstellung externer elektrischer Energie für das HLK-Feldgerät;
- eine Überwachungs-/Servicevorrichtung zur Durchführung spezifischer Service- und Datenprotokollierungsfunktion(en); und/oder
- eine Anzeigevorrichtung.

10. Ein HLK-Feldgerät (1), umfassend:
- einen Basis-HLK-Geräteblock (10), umfassend:
- ein Gehäuse (11);
- einen Elektromotor (M), der innerhalb des Gehäuses (11) angeordnet ist, um ein betätigtes Teil (80), wie z. B. ein Ventil oder eine Klappe, das sich ausserhalb des Gehäuses (11) befindet und mechanisch mit dem HLK-Feldgerät (1) verbindbar ist, anzutreiben, und/oder einen Sensor (S), der so konfiguriert ist, dass er einen Umgebungsparameter eines HLK-Systems (100) misst;
- eine Verbindungsschnittstelle (15A) des ersten Typs;
- eine elektronische Schaltung (12), die mit dem Elektromotor (M) und/oder dem Sensor (S) verbunden ist;
- einen oder mehrere Zusatz-HLK-Geräteblock(s) (20.1-n), die jeweils umfassen:
- ein Gehäuse (21.1-n);
- eine Verbindungsschnittstelle (25A.1-n) des ersten Typs;
- eine Verbindungsschnittstelle (25B.1-n) des zweiten Typs,
wobei die Verbindungsschnittstellen (15A, 25A.1n) des ersten Typs und die Verbindungsschnittstelle(n) (25B.1-n) des zweiten Typs so konfiguriert sind, dass sie mechanisch miteinander verbindbar sind; und
wobei der Basis-HLK-Geräteblock (10) und der/die eine oder mehrere Zusatz-HLK-Geräteblock(s) (20.1-n) so gestapelt sind, dass die Verbindungsschnittstelle (15A, 25A.1-n) des ersten Typs mechanisch mit der Verbindungsschnittstelle (25B.1-n) des zweiten Typs benachbarter HLK-Geräteblöcke (10, 20.1-n) verbunden ist.

11. Das HLK-Feldgerät (1) nach Anspruch 10, wobei die Verbindungsschnittstellen (15A, 25A.1-n) des ersten Typs eine mechanische Schnittstelle (17A, 27A.1-n) des ersten Typs umfassen und die Verbindungsschnittstelle(n) (25B.1-n) des zweiten Typs eine mechanische Schnittstelle(n) (27B.1-n) des zweiten Typs umfassen, die so konfiguriert sind, dass sie benachbarte HLK-Geräteblöcke (10, 20.1-n) beim Stapeln der HLK-Geräteblöcke (10, 20.1-n) ausrichten und/oder gegenseitig ineinandergreifen, z. B. um durch eine Passung beim Stapeln der HLK-Geräteblöcke (10, 20.1-n) gegenseitig ineinanderzugreifen, um dadurch die Vielzahl der HLK-Geräteblöcke (10, 20.1-20-n) fest miteinander zu verbinden.

12. Das HLK-Feldgerät (1) nach Anspruch 11,wobei:
- der/die Zusatz-HLK-Geräteblock(s) (20.1-n) ferner eine elektronische Schaltung (22.1-n) umfassen; und
- die Verbindungsschnittstelle (15A) des ersten Typs des Basis-HLK-Geräteblocks (10) und/oder die Verbindungsschnittstelle(n) (25B.1-n) des zweiten Typs eines oder mehrerer der Zusatz-HLK-Geräteblock(s) (20.1-n) elektrische Schnittstellen (16A, 26B.1-n) umfassen, die elektrisch mit der jeweiligen elektronischen Schaltung (12, 22.1-n) verbunden und so konfiguriert sind, dass sie elektrisch miteinander verbindbar sind, wobei die Vielzahl von HLK-Geräteblöcken (10, 20.1-n) elektrisch miteinander über die elektrischen Schnittstellen (16A, 26A.1-n, 26B.1-n) benachbarter HLK-Geräteblöcke (10, 20.1-n) verbunden sind, um dadurch den Transfer von Daten und/oder elektrischer Energie dazwischen zu ermöglichen.

13. Das HLK-Feldgerät (1) nach Anspruch 11, wobei:
- der/die Zusatz-HLK-Geräteblock(s) (20.1-n) jeweils ferner eine elektronische Schaltung (22.1-n) umfassen;
- die Verbindungsschnittstellen (15A, 25A.1-n, 25B.1-n) jeweils eine elektrische Schnittstelle (16A, 26A.1-n, 26B.1-n) umfassen, die elektrisch mit der jeweiligen elektronischen Schaltung (12, 22.1-n) verbunden ist, wobei die Verbindungsschnittstellen (15A, 25A.1-n, 25B.1-n) so konfiguriert sind, dass sie elektrisch miteinander verbindbar sind.

14. Das HLK-Feldgerät (1) nach Anspruch 12 oder 13, wobei:
- die elektronische Schaltung (12, 22.1-n) eines ersten der Vielzahl von HLK-Geräteblöcken (10, 20.1-n) so konfiguriert ist, dass sie darin gespeicherte Konfigurationsdaten über die elektrische Schnittstelle (16A, 26A.1-n, 26B.1-n) des ersten der Vielzahl von HLK-Geräteblöcken (10, 20.1-n) überträgt; und
- die elektronische Schaltung (12, 22.1-n) eines zweiten der Vielzahl von HLK-Geräteblöcken (10, 20.1-n), der sich von dem ersten der Vielzahl von HLK-Geräteblöcken (10, 20.1-n) unterscheidet, so konfiguriert ist, dass sie Konfigurationsdaten über die elektrische Schnittstelle (16A, 26A.1-n, 26B.1-n) des zweiten der Vielzahl von HLK-Geräteblöcken (10, 20.1-n) empfängt.

15. Das HLK-Feldgerät (1) nach Anspruch 14, ferner konfiguriert, um Konfigurationsdaten des ersten der Vielzahl von HLK-Geräteblöcken (10, 20.1-n) an den zweiten der Vielzahl von HLK-Geräteblöcken (10, 20.1-n) zu übertragen, sobald das HLK-Feldgerät (1) mit elektrischer Energie versorgt wird.

16. Das HLK-Feldgerät (1) nach einem der Ansprüche 12 bis 15, wobei:
d) mindestens einer der HLK-Geräteblöcke (10, 20.1-n) eine externe elektrische Schnittstelle (18, 28.1-n) umfasst; und
e) mehr als einer der Vielzahl von HLK-Geräteblöcken (10, 20.1-n) des HLK-Feldgeräts (1) so konfiguriert sind, dass sie über die externe elektrische Schnittstelle (18, 28.1-n) des mindestens einen der HLK-Geräteblöcke (10, 20.1-n) über deren jeweilige elektrische Schnittstellen (16A, 26A.1-n, 26B.1-n) mit Strom versorgt und/oder konfiguriert werden können.

17. Das HLK-Feldgerät (1) nach einem der Ansprüche 12 bis 16, wobei das Gehäuse (21.1-n) eines oder mehrerer der Zusatz-HLK-Geräteblock(s) (20.1-n) umfasst:
- einen ersten Gehäuseteil (21.I.1-n), der die Verbindungsschnittstelle (25B.1-n) des zweiten Typs aufnimmt;
- einen zweiten Gehäuseteil (21.II.1-n), der die Verbindungsschnittstelle (25A.1-n) des ersten Typs aufnimmt,
wobei die elektrische Schnittstelle (26A.1-n) der Verbindungsschnittstelle (25A.1-n) des ersten Typs elektrisch mit der elektrischen Schnittstelle (26B.1-n) der Verbindungsschnittstelle (25B.1-n) des zweiten Typs durch eine elektrische Verlängerungsverbindung (23.1-n), insbesondere eine flexible elektrische Verlängerungsverbindung (23.1-n), verbunden ist.

18. Das HLK-Feldgerät (1) nach einem der Ansprüche 10 bis 17, wobei der/die eine oder mehrere Zusatz-HLK-Geräteblock(s) (20.1-n) eine oder mehrere funktionale Erweiterungsvorrichtung(en) (24.1-n) umfassen, ausgewählt aus der Liste, die Folgendes umfasst:
- eine Verarbeitungsvorrichtung, wie z. B. ein Mikrocontroller zur Bereitstellung von Rechenleistung für das HLK-Feldgerät (1);
- eine mechanische Leistungsvorrichtung;
- eine Steuerungsvorrichtung, die HLK-Steuerfunktionen implementiert, wie z. B. eine proportionale P-, eine proportional-integrale PI-, eine proportional-integral-derivativen PID-, eine integrale I- und/oder eine auf neuronalen Netzen basierende Steuerung;
- eine Kommunikationsvorrichtung, umfassend eine drahtgebundene Kommunikationsschnittstelle und/oder eine Funkkommunikationsvorrichtung;
- eine Energiespeichervorrichtung, umfassend eine kapazitive Speichervorrichtung und/oder eine elektrochemische Speichervorrichtung;
- eine Sensorvorrichtung, umfassend einen oder mehrere Sensoren zur Messung eines Parameters eines HLK-Systems (100);
- eine HLK-Schnittstellenvorrichtung, umfassend eine Schnittstelle zu einer Klappe und/oder einem Rohr eines HLK-Systems (100);
- eine Positionsrückmeldevorrichtung des betätigten Teils (80);
- eine elektrische Stromversorgungsvorrichtung zur Bereitstellung externer elektrischer Energie für das HLK-Feldgerät;
- eine Überwachungs-/Servicevorrichtung zur Durchführung spezifischer Service- und Datenprotokollierungsfunktion(en); und/oder
- eine Anzeigevorrichtung.

19. Ein HLK-System (100), umfassend:
- ein HLK-Feldgerät (1) nach einem der Ansprüche 10 bis 18; und
- ein betätigtes Teil (80), wie z. B. ein Ventil und/oder eine Klappe, das antriebsmässig mit dem Elektromotor (M) des Basis-HLK-Geräteblocks (10) des HLK-Feldgeräts (1) verbunden ist.

## Revendications

1. Procédé de fabrication d'un dispositif de terrain CVC (1) à partir d'une pluralité de blocs de dispositifs CVC (10, 20.1-n), comprenant les étapes :
a) fourniture d'un bloc de dispositif CVC de base (10) comprenant :
- un boîtier (11) ;
- un moteur électrique (M) agencé à l'intérieur du boîtier (11) pour entraîner une pièce actionnée (80), telle qu'une vanne ou un registre, située à l'extérieur du boîtier (11) et connectable mécaniquement au dispositif de terrain CVC (1), et/ou un capteur (S) configuré pour mesurer un paramètre environnemental d'un système CVC (100) ;
- une interface de connexion (15A) d'un premier type ;
- un circuit électronique (12) connecté au moteur électrique (M) et/ou au capteur (S) ;
b) fourniture d'un ou plusieurs blocs de dispositifs CVC additionnels (20.1-n), chacun comprenant :
- un boîtier (21.1-n) ;
- une interface de connexion (25A.1-n) du premier type ;
- une interface de connexion (25B.1-n) d'un second type,
dans laquelle les interfaces de connexion (15A, 25A.1n) du premier type et la ou les interfaces de connexion (25B.1-n) du second type sont configurées pour être connectables mécaniquement les unes aux autres ; et
c) empilement du bloc de dispositif CVC de base (10) et du ou des blocs de dispositifs CVC additionnels (20.1-n), connectant ainsi mécaniquement l'interface de connexion (15A, 25A.1-n) du premier type à l'interface de connexion (25B.1-n) du second type des blocs de dispositifs CVC adjacents (10, 20.1-n).

2. Le Procédé selon la revendication 1, dans lequel les interfaces de connexion (15A, 25A.1-n) du premier type comprennent une interface mécanique (17A, 27A.1-n) d'un premier type et la ou les interfaces de connexion (25B.1-n) du second type comprennent une ou des interfaces mécaniques (27B.1-n) d'un second type, configurées de manière à aligner et/ou à s'emboîter mutuellement les blocs de dispositifs CVC adjacents (10, 20.1-n) lors de l'empilement des blocs de dispositifs CVC (10, 20.1-n), par exemple pour s'emboîter mutuellement par un ajustement d'interface lors de l'empilement des blocs de dispositifs CVC (10, 20.1-n) afin de fixer solidement la pluralité de blocs de dispositifs CVC (10, 20.1 - 20-n) les uns aux autres.

3. Le Procédé selon la revendication 2, dans lequel:
- le ou les blocs de dispositifs CVC additionnels (20.1-n) comprennent en outre un circuit électronique (22.1-n) ; et
- l'interface de connexion (15A) du premier type du bloc de dispositif CVC de base (10) et la ou les interfaces de connexion (25B.1-n) du second type du ou des blocs de dispositifs CVC additionnels (20.1-n) comprennent des interfaces électriques (16A, 26B.1-n) connectées électriquement au circuit électronique respectif (12, 22.1-n), configurées pour être connectables électriquement les unes aux autres, l'empilement de la pluralité de blocs de dispositifs CVC (10, 20.1-n) comprenant en outre la connexion électrique de la pluralité de blocs de dispositifs CVC (10, 20.1-n) les uns aux autres via les interfaces électriques (16A, 26A.1-n, 26B.1-n) des blocs de dispositifs CVC adjacents (10, 20.1-n) pour permettre ainsi le transfert de données et/ou d'énergie électrique entre eux.

4. Le Procédé selon la revendication 2, dans lequel:
- le ou les blocs de dispositifs CVC additionnels (20.1-n) comprennent chacun en outre un circuit électronique (22.1-n) ;
- les interfaces de connexion (15A, 25A.1-n, 25B.1-n) comprennent chacune une interface électrique (16A, 26A.1-n, 26B.1-n) connectée électriquement au circuit électronique respectif (12, 22.1-n), les interfaces de connexion (15A, 25A.1-n, 25B.1-n) étant configurées pour être connectables électriquement les unes aux autres.

5. Le Procédé selon l'une des revendications 3 ou 4, comprenant en outre les étapes de :
- stockage de données de configuration dans le circuit électronique (12, 22.1-n) d'un premier de la pluralité de blocs de dispositifs CVC (10, 20.1-n) et configuration du circuit électronique (12, 22.1-n) pour transmettre des données de configuration via l'interface électrique (16A, 26A.1-n, 26B.1-n) du premier de la pluralité de blocs de dispositifs CVC (10, 20.1-n) ; et
- configuration du circuit électronique (12, 22.1-n) d'un second de la pluralité de blocs de dispositifs CVC (10, 20.1-n), différent du premier de la pluralité de blocs de dispositifs CVC (10, 20.1-n), pour recevoir des données de configuration via l'interface électrique (16A, 26A.1-n, 26B.1-n) du second de la pluralité de blocs de dispositifs CVC (10, 20.1-n).

6. Le Procédé selon la revendication 5, comprenant en outre l'étape consistant à provoquer le transfert des données de configuration du premier de la pluralité de blocs de dispositifs CVC (10, 20.1-n) vers le second de la pluralité de blocs de dispositifs CVC (10, 20.1-n) lorsque le dispositif de terrain CVC (1) est alimenté en énergie électrique.

7. Le Procédé selon l'une des revendications 3 à 6, comprenant en outre les étapes
d) fourniture d'une interface électrique externe (18, 28.1-n) à au moins un des blocs de dispositifs CVC (10, 20.1-n), l'interface électrique externe (18, 28.1-n) étant connectée au circuit électronique (12, 22.1-n) du ou des blocs de dispositifs CVC (10, 20.1-n) ; et
e) configuration de plus d'un de la pluralité de blocs de dispositifs CVC (10, 20.1-n) du dispositif de terrain CVC (1) pour être alimentés en énergie électrique et/ou configurés via l'interface électrique externe (18, 28.1-n) du ou des blocs de dispositifs CVC (10, 20.1-n) via leurs interfaces électriques respectives (16A, 26A.1-n, 26B.1-n).

8. Le Procédé selon l'une des revendications 3 à 7, dans lequel le boîtier (21.1-n) d'un ou plusieurs des blocs de dispositifs CVC additionnels (20.1-n) comprend:
- une première partie de boîtier (21.l.1-n) logeant l'interface de connexion (25B.1-n) du second type ;
- une seconde partie de boîtier (21.ll.1-n) logeant l'interface de connexion (25A.1-n) du premier type,
dans laquelle l'interface électrique (26A.1-n) de l'interface de connexion (25A.1-n) du premier type est connectée électriquement à l'interface électrique (26B.1-n) de l'interface de connexion (25B.1-n) du second type par une liaison d'extension électrique (23.1-n), en particulier une liaison d'extension électrique flexible (23.1-n).

9. Le Procédé selon l'une des revendications 1 à 8, dans lequel le ou les blocs de dispositifs CVC additionnels (20.1-n) comprennent un ou plusieurs dispositifs d'extension fonctionnelle (24.1-n) choisis dans la liste comprenant :
- un dispositif de traitement, tel qu'un microcontrôleur pour fournir une puissance de calcul au dispositif de terrain CVC (1) ;
- un dispositif de performance mécanique ;
- un dispositif de contrôle, mettant en œuvre des fonctions de contrôle CVC, telles qu'un contrôle proportionnel P, proportionnel-intégral PI, proportionnel-intégral-dérivé PID, intégral I et/ou basé sur un réseau neuronal ;
- un dispositif de communication, comprenant une interface de communication filaire et/ou un dispositif de communication radio ;
- un dispositif de stockage d'énergie, comprenant un dispositif de stockage capacitif et/ou un dispositif de stockage électrochimique ;
- un dispositif capteur, comprenant un ou plusieurs capteurs pour la mesure d'un paramètre d'un système CVC (100) ;
- un dispositif d'interface CVC, comprenant une interface vers un registre et/ou un tuyau d'un système CVC (100) ;
- un dispositif de rétroaction de position de la pièce actionnée (80) ;
- un dispositif d'alimentation électrique, pour fournir une alimentation électrique externe au dispositif de terrain CVC ;
- un dispositif de surveillance/service, pour effectuer des fonctions spécifiques de service et d'enregistrement de données ; et/ou
- un dispositif d'affichage.

10. Un dispositif de terrain CVC (1) comprenant :
- un bloc de dispositif CVC de base (10) comprenant :
- un boîtier (11) ;
- un moteur électrique (M) agencé à l'intérieur du boîtier (11) pour entraîner une pièce actionnée (80), telle qu'une vanne ou un registre, située à l'extérieur du boîtier (11) et connectable mécaniquement au dispositif de terrain CVC (1), et/ou un capteur (S) configuré pour mesurer un paramètre environnemental d'un système CVC (100) ;
- une interface de connexion (15A) d'un premier type ;
- un circuit électronique (12) connecté au moteur électrique (M) et/ou au capteur (S) ;
- un ou plusieurs blocs de dispositifs CVC additionnels (20.1-n), chacun comprenant :
- un boîtier (21.1-n) ;
- une interface de connexion (25A.1-n) du premier type ;
- une interface de connexion (25B.1-n) d'un second type,
dans lequel les interfaces de connexion (15A, 25A.1n) du premier type et la ou les interfaces de connexion (25B.1-n) du second type sont configurées pour être connectables mécaniquement les unes aux autres ; et
dans lequel le bloc de dispositif CVC de base (10) et le ou les blocs de dispositifs CVC additionnels (20.1-n) sont empilés de telle sorte que l'interface de connexion (15A, 25A.1-n) du premier type est connectée mécaniquement à l'interface de connexion (25B.1-n) du second type des blocs de dispositifs CVC adjacents (10, 20.1-n).

11. Le dispositif de terrain CVC (1) selon la revendication 10, dans lequel les interfaces de connexion (15A, 25A.1-n) du premier type comprennent une interface mécanique (17A, 27A.1-n) d'un premier type et la ou les interfaces de connexion (25B.1-n) du second type comprennent une ou des interfaces mécaniques (27B.1-n) d'un second type, configurées de manière à aligner et/ou à s'emboîter mutuellement les blocs de dispositifs CVC adjacents (10, 20.1-n) lors de l'empilement des blocs de dispositifs CVC (10, 20.1-n), par exemple pour s'emboîter mutuellement par un ajustement d'interface lors de l'empilement des blocs de dispositifs CVC (10, 20.1-n) afin de fixer solidement la pluralité de blocs de dispositifs CVC (10, 20.1 - 20-n) les uns aux autres.

12. Le dispositif de terrain CVC (1) selon la revendication 11, dans lequel :
- le ou les blocs de dispositifs CVC additionnels (20.1-n) comprennent en outre un circuit électronique (22.1-n) ; et
- l'interface de connexion (15A) du premier type du bloc de dispositif CVC de base (10) et/ou la ou les interfaces de connexion (25B.1-n) du second type d'un ou plusieurs des blocs de dispositifs CVC additionnels (20.1-n) comprennent des interfaces électriques (16A, 26B.1-n) connectées électriquement au circuit électronique respectif (12, 22.1-n), configurées pour être connectables électriquement les unes aux autres, la pluralité de blocs de dispositifs CVC (10, 20.1-n) étant connectée électriquement les unes aux autres via les interfaces électriques (16A, 26A.1-n, 26B.1-n) des blocs de dispositifs CVC adjacents (10, 20.1-n) pour permettre ainsi le transfert de données et/ou d'énergie électrique entre eux.

13. Le dispositif de terrain CVC (1) selon la revendication 11, dans lequel :
- le ou les blocs de dispositifs CVC additionnels (20.1-n) comprennent chacun en outre un circuit électronique (22.1-n);
- les interfaces de connexion (15A, 25A.1-n, 25B.1-n) comprennent chacune une interface électrique (16A, 26A.1-n, 26B.1-n) connectée électriquement au circuit électronique respectif (12, 22.1-n), les interfaces de connexion (15A, 25A.1-n, 25B.1-n) étant configurées pour être connectables électriquement les unes aux autres.

14. Le dispositif de terrain CVC (1) selon la revendication 12 ou 13, dans lequel :
- le circuit électronique (12, 22.1-n) d'un premier de la pluralité de blocs de dispositifs CVC (10, 20.1-n) est configuré pour transmettre des données de configuration stockées en son sein via l'interface électrique (16A, 26A.1-n, 26B.1-n) du premier de la pluralité de blocs de dispositifs CVC (10, 20.1-n) ; et
- le circuit électronique (12, 22.1-n) d'un second de la pluralité de blocs de dispositifs CVC (10, 20.1-n), différent du premier de la pluralité de blocs de dispositifs CVC (10, 20.1-n), est configuré pour recevoir des données de configuration via l'interface électrique (16A, 26A.1-n, 26B.1-n) du second de la pluralité de blocs de dispositifs CVC (10, 20.1-n).

15. Le dispositif de terrain CVC (1) selon la revendication 14, configuré en outre pour transférer des données de configuration du premier de la pluralité de blocs de dispositifs CVC (10, 20.1-n) vers le second de la pluralité de blocs de dispositifs CVC (10, 20.1-n) lorsque le dispositif de terrain CVC (1) est alimenté en énergie électrique.

16. Le dispositif de terrain CVC (1) selon l'une des revendications 12 à 15, dans lequel :
d) au moins un des blocs de dispositifs CVC (10, 20.1-n) comprend une interface électrique externe (18, 28.1-n) ; et
e) plus d'un de la pluralité de blocs de dispositifs CVC (10, 20.1-n) du dispositif de terrain CVC (1) sont configurés pour être alimentés et/ou configurables via l'interface électrique externe (18, 28.1-n) du ou des blocs de dispositifs CVC (10, 20.1-n) via leurs interfaces électriques respectives (16A, 26A.1-n, 26B.1-n).

17. Le dispositif de terrain CVC (1) selon l'une des revendications 12 à 16, dans lequel le boîtier (21.1-n) d'un ou plusieurs des blocs de dispositifs CVC additionnels (20.1-n) comprend :
- une première partie de boîtier (21.l.1-n) logeant l'interface de connexion (25B.1-n) du second type ;
- une seconde partie de boîtier (21.ll.1-n) logeant l'interface de connexion (25A.1-n) du premier type,
dans lequel l'interface électrique (26A.1-n) de l'interface de connexion (25A.1-n) du premier type est connectée électriquement à l'interface électrique (26B.1-n) de l'interface de connexion (25B.1-n) du second type par une liaison d'extension électrique (23.1-n), en particulier une liaison d'extension électrique flexible (23.1-n).

18. Le dispositif de terrain CVC (1) selon l'une des revendications 10 à 17, dans lequel le ou les blocs de dispositifs CVC additionnels (20.1-n) comprennent un ou plusieurs dispositifs d'extension fonctionnelle (24.1-n) choisis dans la liste comprenant :
- un dispositif de traitement, tel qu'un microcontrôleur pour fournir une puissance de calcul au dispositif de terrain CVC (1) ;
- un dispositif de performance mécanique ;
- un dispositif de contrôle, mettant en œuvre des fonctions de contrôle CVC, telles qu'un contrôle proportionnel P, proportionnel-intégral PI, proportionnel-intégral-dérivé PID, intégral I et/ou basé sur un réseau neuronal;
- un dispositif de communication, comprenant une interface de communication filaire et/ou un dispositif de communication radio ;
- un dispositif de stockage d'énergie, comprenant un dispositif de stockage capacitif et/ou un dispositif de stockage électrochimique ;
- un dispositif capteur, comprenant un ou plusieurs capteurs pour la mesure d'un paramètre d'un système CVC (100) ;
- un dispositif d'interface CVC, comprenant une interface vers un registre et/ou un tuyau d'un système CVC (100) ;
- un dispositif de rétroaction de position de la pièce actionnée (80) ;
- un dispositif d'alimentation électrique, pour fournir une alimentation électrique externe au dispositif de terrain CVC ;
- un dispositif de surveillance/service, pour effectuer des fonctions spécifiques de service et d'enregistrement de données ; et/ou
- un dispositif d'affichage.

19. Un système CVC (100) comprenant :
- un dispositif de terrain CVC (1) selon l'une des revendications 10 à 18 ; et
- une pièce actionnée (80), telle qu'une vanne et/ou un registre, connectée de manière motrice au moteur électrique (M) du bloc de dispositif CVC de base (10) du dispositif de terrain CVC (1).
